(19) **Europäisches Patentamt**
**European Patent Office**
**Office européen des brevets**

(11) **EP 1 448 817 B1**

(12) **EUROPEAN PATENT SPECIFICATION**

(45) Date of publication and mention
of the grant of the patent:
**19.11.2008 Bulletin 2008/47**

(51) Int Cl.:
*D01F 6/60* (2006.01)     *D06M 23/00* (2006.01)
*C09D 7/00* (2006.01)

(21) Application number: **02798445.9**

(86) International application number:
**PCT/US2002/036887**

(22) Date of filing: **15.11.2002**

(87) International publication number:
**WO 2003/044250 (30.05.2003 Gazette 2003/22)**

(54) **METHOD OF PRODUCING MICROPULP AND MICROPULP MADE THEREFROM**

VERFAHREN ZUR HERSTELLUNG VON MIKROPULPE UND DADURCH HERGESTELLTE MIKROPULPE

PROCEDE DE PRODUCTION DE MICROPULPE ET MICROPULPE OBTENUE

(84) Designated Contracting States:
**AT BE BG CH CY CZ DE DK EE ES FI FR GB GR IE IT LI LU MC NL PT SE SK TR**

(30) Priority: **16.11.2001 US 333079 P**

(43) Date of publication of application:
**25.08.2004 Bulletin 2004/35**

(73) Proprietor: **E.I. DU PONT DE NEMOURS AND COMPANY**
**Wilmington, DE 19898 (US)**

(72) Inventors:
• **KELLY, Renee, J.**
**Media, PA 19063 (US)**
• **FRANCES, Arnold**
**Glen Allen, VA 23059 (US)**

(74) Representative: **Morf, Jan Stefan et al**
**Abitz & Partner**
**Patentanwälte**
**Postfach 86 01 09**
**81628 München (DE)**

(56) References cited:
**WO-A-93/01333**

• **PATENT ABSTRACTS OF JAPAN vol. 1997, no. 09, 30 September 1997 (1997-09-30) & JP 09 119018 A (OJI PAPER CO LTD), 6 May 1997 (1997-05-06)**
• **PATENT ABSTRACTS OF JAPAN vol. 1997, no. 07, 31 July 1997 (1997-07-31) & JP 09 066525 A (SUMITOMO BAKELITE CO LTD), 11 March 1997 (1997-03-11)**

**Description**

**Field of Invention**

The present invention is directed to a method of producing a dispersion of micropulp and to coating compositions that include the dispersion of micropulp produced in accordance with the process of the present invention.

**Background of Invention**

One of the problems associated with coating compositions, such as those used in automotive refinish or OEM (original equipment manufacturer) application, relates to chipping of automotive paints often caused by gravel and stones. Several methods have been known to increase chip resistance of automotive OEM and refinish paints. One method, disclosed in JP4053878, relates to including organic fibers in coating compositions for improving chip resistance of the floor of an automotive body exposed to a road surface. However, such coating compositions are difficult to apply using conventional spraying techniques, and they tend to produce coatings that are lumpy or have rough surfaces. Therefore, a need still exists for a coating composition that is easy to apply using conventional spraying techniques and results in a coating that has improved chip resistance while still having acceptable surface appearance properties, such as DOI (distinctness of image).

JP-A-9119018 discloses a process for preparing a micropulp comprising contacting aramid fiber suspensions with a medium in a sand mill to increase the ability to hold water. A water retention of 400% is considered to be suitable, corresponding to a length-weighted average fiber length of 0.07 mm.

**Statement of the Invention**

The present invention is directed to a process for producing micropulp comprising the steps of:

contacting organic fibers with a medium comprising a liquid component and a solid component; and
agitating said medium and said organic fibers for sufficient duration to transform said organic fibers into said micropulp dispersed in said medium wherein said micropulp is a fibrous organic material that includes an intermeshed combination of two or more of webbed, dendritic, branched, mushroomed or fibril structures and has a volume average length ranging from 0.01 to 50 micrometers.

The present invention is further directed to micropulp made in accordance with the process of the present invention.

**Brief Description of Drawings**

Figure 1 is a microphotograph that illustrates the physical structure of floc.
Figure 2 is a microphotograph that illustrates the physical structure of pulp.
Figure 3 is a microphotograph that illustrates the physical structure of typical micropulp produced by the process of the present invention.
Figure 4 is a microphotograph that illustrates the physical structure of the micropulp at higher magnification.
Figure 5 is a graph of the complex viscosity versus time for Slurry 3 of the present invention.
Figure 6 is a graph of the viscosity versus shear rate for Slurry 3 of the present invention.
Figure 7 is a comparative graph of the complex viscosities versus time for Slurries 1, 4 and the blend in Slurry 4 before reagitation.
Figure 8 is a comparative graph of the viscosities versus shear rates for Slurries 1, 4 and the blend in Slurry 4 before reagitation.
Figure 9 is a comparative graph of the complex viscosities versus time for paints of Example 7 (Control) and Example 8.
Figure 10 is a graph of the complex viscosities versus frequency for Slurry 15 of the present invention at 25°C and 35°C.

**Detailed Description of the Preferred Embodiment**

The process of the present invention utilizes organic fibers that are known in the art. The organic fibers can be in the form of continuous filament; short fibers either produced directly or cut from the continuous filament; pulp or fibrids.

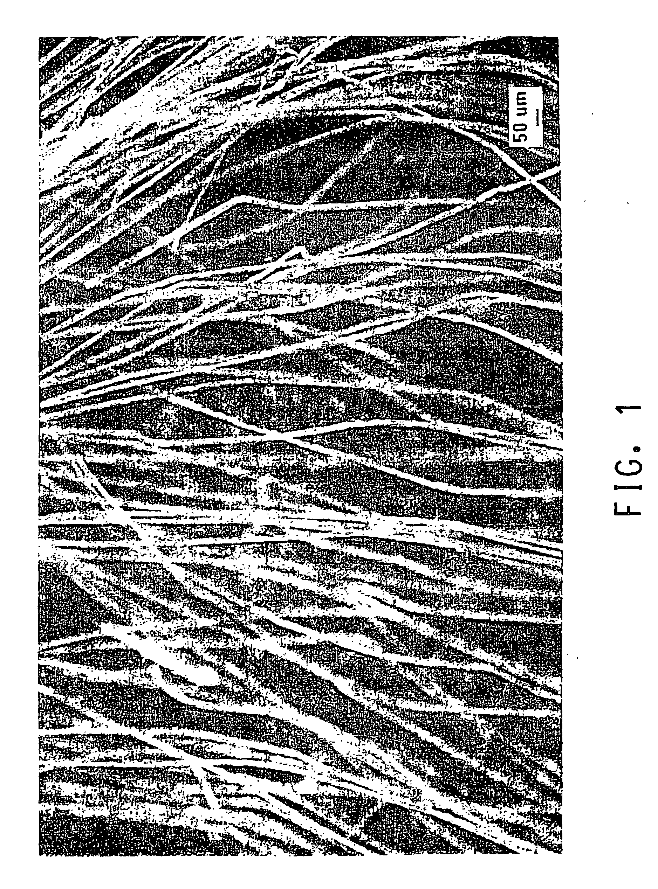

Floc comprises generally short fibers made by cutting continuous filament fibers into short lengths without significant fibrillation; and the lengths of short fibers can be of almost any length, but typically they vary from about 1 mm to 12 mm for a reinforcing fiber and up to several centimeters for a staple fiber that is spun into a yarn. Short fibers suitable for use in the present invention are the reinforcing fibers disclosed in US Patent No. 5,474,842, which is incorporated herein by reference. The microphotograph of Figure 1 illustrates the physical structure of typical floc, such as 1.5 mm Kevlar® 6F561 Floc supplied by DuPont Company of Wilmington, Delaware.

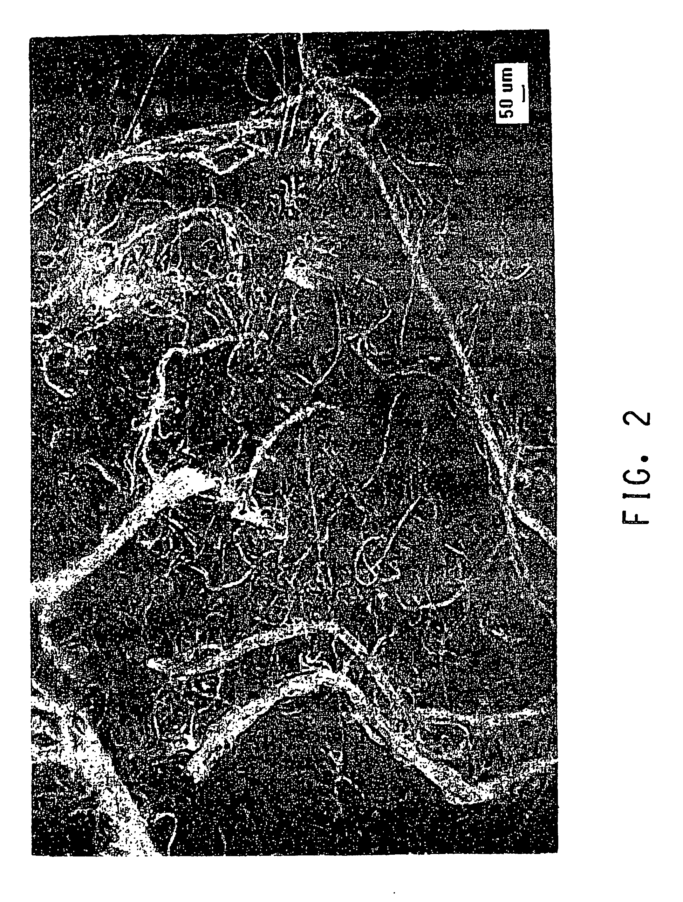

Pulp can be made by refining fibers to fibrillate the short pieces of the fiber material. Pulp can be also made by casting a polymerizing solution of polymer material and grinding and refining the solution, once solidified. Such a process is disclosed in US Patent No. 5,028,372. Pulp particles differ from short fibers by having a multitude of fibrils or tentacles extending from the body of each pulp particle. These fibrils or tentacles provide minute hair-like anchors for reinforcing composite materials and cause the pulp to have a very high surface area. The microphotograph of Figure 2 illustrates the physical structure of typical pulp, such as Kevlar® 1 F361 supplied by DuPont Company of Wilmington, Delaware.

Fibrids are substantially sheet-like structures, which can be made in accordance with the process disclosed in US Patent Nos. 5,209,877, 5,026,456, 3,018,091 and 2,999,788, which are all incorporated herein by reference. The process includes adding a solution of organic polymer, with vigorous agitation, to a liquid, which is a non-solvent for the polymer and is miscible with the solvent of the solution, to cause coagulation of fibrids; the coagulated fibrids are wet milled and separated from the liquid; the separated fibrids are dried, by means appropriate, to yield clumps of fibrids having a high surface area; and the clumps are opened to yield a particulate fibrid product. The Product Information brochure identified as H-67192 10/98 published DuPont Canada Inc. in Mississauga, Ontario, Canada illustrates the film like physical structure of typical fibrids known as F20W DuPont fibrids.

The organic fibers suitable for use in the present invention can be made of aliphatic polyamides, polyesters, polyacrylonitriles, polyvinyl alcohols, polyolefins, polyvinyl chlorides, polyvinylidene chlorides, polyurethanes, polyfluorocarbons, phenolics, polybenzimidazoles, polyphenylenetriazoles, polyphenylene sulfides, polyoxadiazoles, polyimides, aromatic polyamides, or a mixture thereof. More preferred polymers are made from aromatic polyamides, polybenzoxadiazole, polyben-zimidazole, or a mixture thereof. Still more preferred organic fibers are aromatic polyamides ((p-phenylene terephthalamide), poly(m-phenylene isophthalamide), or a mixture thereof).

More particularly, the aromatic polyamide organic fibers disclosed in US Patent Nos. 3,869,430; 3,869,429; 3,767,756; and 2,999,788, all of which are incorporated herein by reference, are preferred. Such aromatic polyamide organic fibers and various forms of these fibers are available from DuPont Company, Wilmington, Delaware under the trademark Kevlar® fibers, such as Kevlar® Aramid Pulp, 1F543, 1.5 mm Kevlar® Aramid Floc 6F561, DuPont Nomex® aramid Fibrids F25W. Other suitable commercial polymer fibers include:

Zylon® PBO-AS (Poly(p-phenylene-2,6-benzobisoxazole) fiber, Zylon® PBO-HM (Poly(p-phenylene-2,6-benzobisoxazole)) fiber, Dyneema® SK60 and SK71 ultra high strength polyethylene fiber, all supplied by Toyobo, Japan. Celanese Vectran® HS pulp, EFT 1063-178, supplied by Engineering Fibers Technology, Shelton, Connecticut. CFF Fibrillated Acrylic Fiber supplied by Sterling Fibers Inc, Pace, Florida. Tiara Aramid KY-400S Pulp supplied by Daicel Chemical Industries, Ltd, 1 Teppo-Cho, Sakai City Japan.

The organic fibers suitable for use in the present invention also include natural fibers, such as cellulose, cotton and wool fibers.

The applicants have unexpectedly discovered that the aforedescribed organic fibers can be converted into micropulp having a volume average length ranging from 0.01 micrometers to 50 micrometers, preferably ranging from 0.1 micrometers to 50 micrometers and more preferably from ranging from 0.1 micrometers to 10 micrometers. The more preferred range is especially suitable for use in glossy coating compositions. As used herein, the volume average length means:

$$\frac{\sum (\text{number of fibers of given length}) \times (\text{length of each fiber})^4}{\sum (\text{number of fibers of given length}) \times (\text{length of each fiber})^3}$$

Generally, the micropulp comprising fibrous organic material has an average surface area ranging from 25 to 500 square meter per gram, preferably ranging from 25 to 200 square meter per gram and more preferably ranging from 30 to 80 square meter per gram. Applicants have also unexpectedly discovered that including the micropulp in a coating composition results in a coating with improved chip resistance with no appreciably adverse impact on coating appearance.

Moreover, such a coating composition is also easy to apply using conventional application techniques, such as spray, brush, or roller coating.

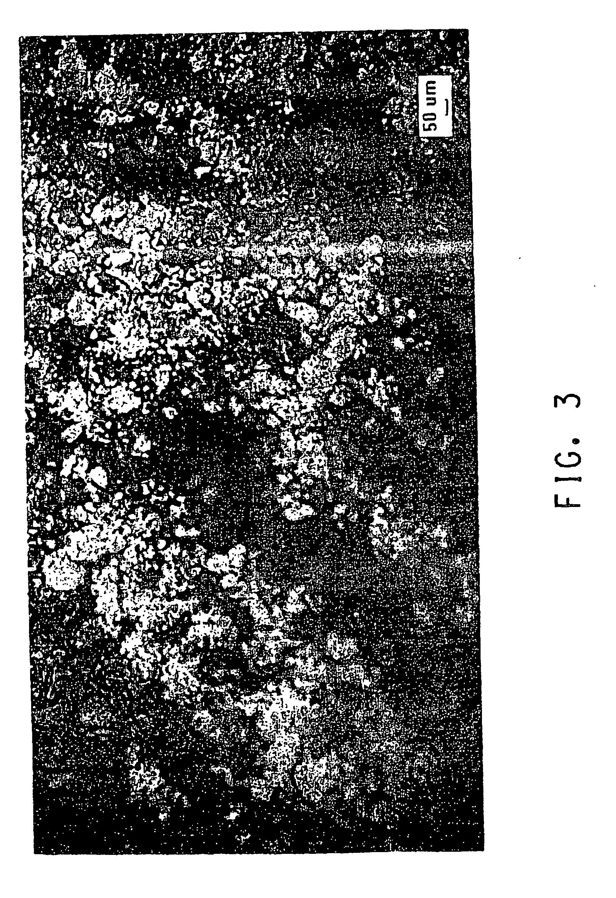

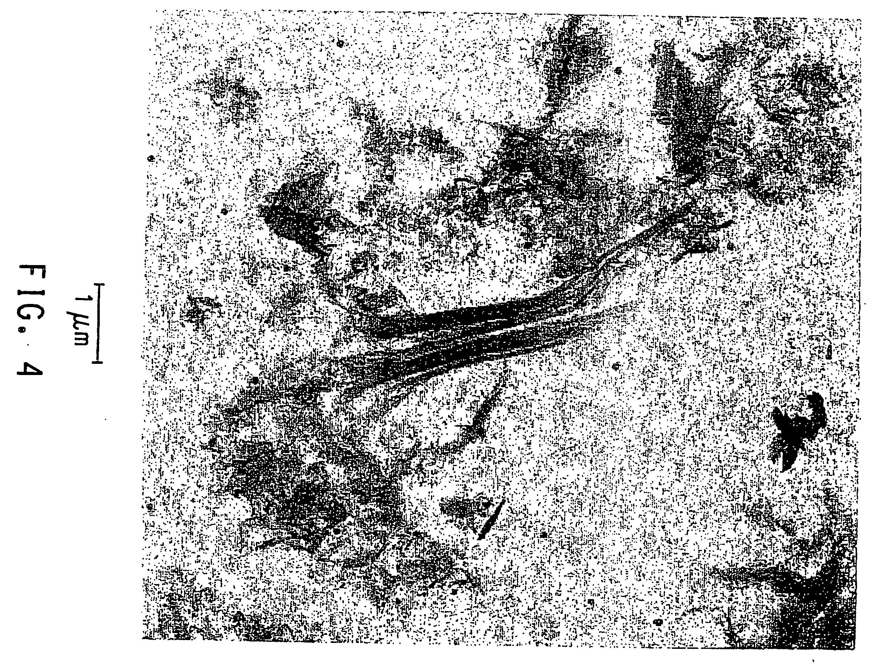

The microphotographs of Figures 3 and 4 illustrate the physical structure of an exemplar of micropulp made by the process of the present invention from Kevlar® 1 F543 pulp supplied by DuPont Company of Wilmington, Delaware. It should be understood that the physical structure of the micropulp plays a crucial role in the properties micropulp imparts to various uses, which are described below. These properties could not obtained by utilizing in the organic fibers known in the art.

The process of the present invention for producing micropulp includes contacting organic fibers with a medium comprising a liquid component and a solid component.

The liquid component suitable for use in the present invention can include an aqueous liquid, one or more liquid polymers, one or more solvents, or a combination thereof. Depending upon the type of organic fibers that are being agitated, the desired end product and/or the end application, the liquid component is chosen. The aqueous liquid includes, water; or water containing one or more miscible solvents, such as an alcohol. Suitable solvents include aromatic hydrocarbons, such as petroleum naphtha or xylenes; ketones, such as methyl amyl ketone, methyl isobutyl ketone, methyl ethyl ketone or acetone; esters, such as butyl acetate or hexyl acetate; glycol ether esters, such as propylene glycol monomethyl ether acetate; or a combination thereof. Some of the suitable liquid polymers include polyester and acrylic polymer.

The solid component suitable for use in the present invention can have various shapes, such as spheroids, diagonals, irregularly shaped particles or a combination thereof. Spheroids are preferred. The maximum average size of the solid component can range from 10 micrometers to 127,000 micrometers, and it depends upon the type of agitating device used to produce the micropulp of the present invention. For example, when attritors are used, the size generally varies from about 0.6 mm diameter to about 25.4 mm. When media mills are used, the size generally varies from about 0.1 to 2.0 mm, preferably from 0.2 to 2.0 mm. When ball mills are used, the size generally varies from about 3.2 mm (1/8") to 76.2 mm (3.0 inches), preferably from 3.2 mm (1/8") to 9.5 mm (3/8 inches).

The solid component can be made from plastic resin, glass, alumina, zirconium oxide, zirconium silicate, cerium-stabilized zirconium oxide, fused zirconia silica, steel, stainless steel, sand, tungsten carbide, silicon nitride, silicon carbide, agate, mullite, flint, vitrified silica, borane nitrate, ceramics, chrome steel, carbon steel, cast stainless steel, or a combination thereof. Some of the plastic resins suitable for the solid component include polystyrene, polycarbonate, and polyamide. Some of the glass suitable for the solid component includes lead-free soda lime, borosilicate and black glass. Zirconium silicate can be fused or sintered.

The solid component suitable for use in the present process is preferably balls made of carbon steel, stainless steel, tungsten carbide or ceramic. If desired, a suitable mixture of these balls having the same size or having varying sizes is also suitable for use the in the present invention. The diameter of the balls generally ranges from about 0.1 millimeters to 76.2 millimeters and preferably from about 0.4 millimeters to 9.5 millimeters, more preferably from about 0.7 millimeters to 3.18 millimeters. More particularly preferred are steel balls having a diameter of 3.18 millimeters and ceramic balls having a diameter ranging from 0.7 to 1.7 millimeters.

The solid components are readily available from various sources, some of which include Glenn Mills Inc., Clifton, New Jersey, Fox Industries Inc., Fairfield, New Jersey and Union Process, Akron, Ohio.

The contacting step preferably includes mixing the organic fibers with the liquid component of the medium to form a premix. If desired, the premix may be further mixed in a conventional mixer, such as an air mixer, to further mix the organic fibers with the liquid medium. The premix is then added to the solid component, which is preferably kept in an agitated state in an agitating device such as an attritor or mill. If desired, one can mix the liquid component with the solid component before contacting with the organic fibers, or to simultaneously convey the solid component, the liquid component and the organic fibers to the agitating device. It is understood that the contacting step can also include adding the organic fibers to the solid component followed by the addition of the medium to the agitating device. Generally, the solid component, such as steel balls, are poured into the attritor chamber and then agitated by the stirring arms of the attritor before the premix is added to the attritor chamber.

Preferably, the organic fibers are dried before the aforedescribed contacting step. The duration and temperature at which the organic fibers are dried depend upon the physical and chemical-make up of the organic fibers.

The agitating step is a size-reduction and fiber modification process in which the organic fibers repeatedly come in contact with the solid components, such as steel balls, maintained in an agitated state by, for example, one or more stirring arms of an attritor to masticate the fibers. Unlike the conventional grinding or chopping processes which tend to reduce the fiber length, albeit with some increase in surface area and fibrillation, the size reduction in the attriting process results from both longitudinal separation of the organic fibers into substantially smaller diameter fibers and a length reduction. Fiber length reductions of one, two or even greater orders of magnitude can be attained. The agitating step is continued for sufficient duration to transform the organic fibers into the micropulp. The micropulp produced during the agitating step of the present invention is a patentably distinct fibrous organic material that includes an intermeshed combination of two or more of webbed, dendritic, branched, mushroomed or fibril structures.

The agitating step may be accomplished in a variety of agitating devices, such as an attritor or a mill, which may be batch or continuously operated. Batch Attritors are known in the art. For example, Attritor Model 01, 1-S, 10-S, 15-S, 30-S, 100-S and 200-S supplied by Union Process, Inc. of Akron, Ohio are well suited for the process of the present invention. Another supplier is Glen Mills Inc. of Clifton, New Jersey. The media mills are supplied by Premier Mills, Reading Pennsylvania. Some of the suitable models include Supermill HM and EHP Models. Moreover, it may be desirable to incrementally transform the organic fibers into the micropulp, such as by repeatedly passing the medium containing the organic fibers through a media mill.

Preferably, the solid component is poured into the agitation chamber and then agitated, such as by the stirring arms, and the premix of the organic fibers with the liquid component is then poured into the chamber. To accelerate the rate of transformation, the solid component is circulated during the agitating step through an external passage that is typically connected near the bottom and the top of the chamber for a vertical media mill. The rate at which the solid component is agitated depends upon the physical and chemical make-up of the organic fibers being transformed, the size and type of the solid component, the duration of the transformation, as well as the size of the micropulp desired. The agitation of the solid component in an attritor is generally controlled by the tip speed of the stirring arms and the number of stirring arms provided in the attritor. Typically, four to twelve arms are provided, preferably six arms are provided and the tip speed of the stirring arms generally range from about 150 fpm to about 1200 fpm, preferably from about 200 fpm to about 1000 fpm and more preferably from about 300 fpm to about 500 fpm. Generally, a cooling jacket that surrounds the chamber of the attritor cools the chamber of the attritor containing the organic fibers and the medium. For the media mills, the tip speeds of the stirring arms generally range from about 1500 fpm to about 3500 fpm and preferably from about 2000 fpm to about 3000 fpm.

The load of the solid component means the bulk volume and not the actual volume of the agitating chamber. Thus, 100% load means about 60% of the chamber volume since substantial air pockets exist within the solid component. The load for the media mill or an attritor ranges from 40% to 90%, preferably from 75% to 90% based on the full load. The load for the ball mill ranges from 30% to 60% based on the full load.

After the organic fibers are transformed into the micropulp, the solid component can be separated though conventional processes to form a slurry of the micropulp in the liquid component. Some of the conventional separation processes include a mesh screen having openings that are small enough for the liquid component containing the micropulp to pass through while the solid component is retained on the mesh screen. Thereafter, the slurry containing the dispersed micropulp can be used directly. The slurry of the preferred micropulp on a 254 microns (10 mils) draw down on a glass, when visually observed, contains negligible grit or seed.

If desired, the micropulp can be filtered off from the liquid component and then dried, or the liquid component can be evaporated to produce a dry form of the micropulp.

The process of the present invention also includes transforming the organic fibers in stages by using different and/or the same solid components and different and/or the same organic fibers at subsequent stages. In addition, the present invention includes incrementally transforming the organic fibers, in stages, to produce the micropulp. Thus, additional amounts of organic fibers can be added to the liquid component containing the micropulp to increase the solids level of the micropulp dispersed in the liquid component.

Applicants unexpectedly discovered that by including micropulp made by the process of the present invention in coating compositions, such as those used in OEM automotive or automotive refinish applications, the chip resistance of the coatings resulting therefrom can be improved without substantially adversely affecting the appearance of the coatings. Generally, depending upon the end use, the coating compositions can include up to 50 parts by weight, generally 0.01 to 25 parts by weight, preferably 0.02 to 15 parts by weight and more preferably 0.05 to 5 parts by weight of the micropulp based on the total weight of the composition.

The chip resistance of a pigmented coating can be affected by the amount of inert material, such as pigment particles, present in the coating composition. In order to achieve an acceptable degree of chip resistance, the amount of inert material present in a coating composition should be less that the critical pigment volume concentration (CPVC). This concentration is defined as the level of inert material where the film forming binder component just surrounds each pigment particle without the particles touching one another. In the event there is insufficient amount of film forming binder component, the pigment particles will touch each other, resulting in a brittle or non-cohesive coating, i.e., the concentration of inert material being greater than the critical pigment volume concentration. It is to be noted that the critical pigment volume concentration will vary from pigment to pigment and from binder to binder. The specific critical pigment volume concentration for any particular pigmented coating composition can be obtained by experimentation.

The CPVC of a particular pigmented coating composition also depends upon the hiding or opacity obtained from a coating from that pigmented coating composition. Such pigmented compositions are typically used in single or multi-layer glamour coatings in automotive applications or decorative commercial applications. Thus, pigmented coating compositions containing pigments with higher hiding characteristics, such white pigments, require lower PVC needed to achieve the same degree of hiding when compared to pigments with lower hiding characteristics, such as red pigments. The CPVC of a pigmented coating composition is determined by producing a series coatings having increasing PVCs on a test plaque, which has half of its surface coated white and the other half coated black. The PVC level which equally hides the black and white surfaces of the test plaque is the critical pigment volume concentration (CPVC) for that pigmented coating composition.

Thus, a ratio of PVC that provides acceptable chip resistance to CPVC for a pigmented coating composition, called a critical ratio (PVC/CPVC), depends upon the type pigment being used. It preferably varies from 0.01 to 0.99. The critical ratio is lower for pigments with higher hiding characteristics than those lower hiding characteristics. The chip resistance of pigmented compositions with lower hiding characteristics, such as red, tend to have lower chip resistance than those with pigmented coating compositions that contain pigments having higher hiding characteristics, since higher PVC has to used to achieve acceptable degree of hiding. Applicants have unexpectedly discovered that by including the micropulp made by the process of the present invention in pigmented coating compositions having lower hiding characteristics, such as red pigment, the chip resistance can be improved without substantially affecting the coating appearance.

Applicants made yet another unexpected discovery. The presence of micropulp in a coating composition reduces the need to include higher amounts of anti-mottling agents, such as waxes, especially in metallized coating compositions that contain metal flakes, such as aluminum flakes. As a result, by reducing or even eliminating the amount of wax used in pigmented coating compositions, the formulator has more formulation flexibility for adding other components in a coating composition.

Applicants made yet another unexpected discovery. The presence of micropulp in a coating composition improves its pseudoplastic behavior. The composition viscosity drops when subjected to shear i.e. the shear produced when a coating composition exits from a spray nozzle, or is applied by brush or roller. Such compositions are easy to spray but still provide post application properties typically seen in viscous paints. Thus, the coating composition has high in-can viscosity that prevents settling and also prevents sagging of a paint layer in its wet state. A coating from the coating composition of the present invention has improved chip resistance, anti-sag property, mottling resistance, flake control, or a combination thereof.

Moreover, a paint layer of a pigmented coating composition containing the micropulp can be readily baked at higher temperatures without affecting flake orientation or increases in sag, orange peel or fish eyes. Especially, when the coating composition is used in an automotive refinish application, it can provide better sanding properties, i.e. the user is able to sand the coating soon after spray application.

Typically, the previously described slurry, or an aliquot thereof, is added to a coating composition to improve its coating properties described above. The present invention also contemplates applying a layer of the slurry of the present invention to produce a coating having improved chip resistance. The micropulp of the present invention can be used in a clear coating composition in varied applications, such as used in automotive OEM and refinish.

Generally, the coating composition includes a binder component in which the micropulp is dispersed. Some suitable binder components are an acrylic polymer, polyester, polyurethane, polyether, polyvinylbutyral, polyvinylchloride, polyolefin, epoxy, silicone, vinyl ester, phenolic, alkyd or a combination thereof.

The binder component of the coating composition of the present invention can contain from about 0.1 to 50% by weight of an acrylic polymer which is the polymerization product of methacrylate, and acrylate monomers and has a weight average molecular weight of about 1,000 to 20,000. Styrene and other $\alpha,\beta$ ethylenically unsaturated monomers may also be used with the above monomers in the acrylic polymer. The molecular weight is measured by gel permeation chromatography using polymethyl methacrylate as a standard.

Typical acrylic polymers are prepared from one or more following group of monomers, such as, for example, acrylic ester monomer including methyl acrylate, ethyl acrylate, butyl acrylate, 2-ethylhexyl acrylate, decyl acrylate, methyl methacrylate, ethyl methacrylate, butyl methacrylate, lauryl (meth)acrylate, isobornyl (meth)acrylate, isodecyl (meth)acrylate, oleyl (meth)acrylate, palmityl (meth)acrylate, stearyl (meth)acrylate, hydroxyethyl (meth)acrylate, and hydroxypropyl (meth)acrylate; acrylamide or substituted acrylamides; styrene or alkyl substituted styrenes; butadiene; ethylene; vinyl acetate; vinyl ester of "Versatic" acid (a tertiary monocarboxylic acid having $C_9$, $C_{10}$ and $C_{11}$ chain length, the vinyl ester is also known as "vinyl versataten), or other vinyl esters; vinyl monomers, such as, for example, vinyl chloride, vinylidene chloride, vinyl pyridine, N-vinyl pyrrolidone; amino monomers, such as, for example, N,N'-dimethylamino (meth)acrylate; chloroprene and acrylonitrile or methacrylonitrile. Acrylic acid, methacrylic acid, crotonic acid, itaconic acid, fumaric acid, maleic acid, monometlyl itaconate, monomethyl fumarate, monobutyl fumarate, maleic anhydride, 2-acrylamido-2-methyl-1-propanesulfonic acid, sodium vinyl sulfonate, and phosphoethyl methacrylate.

Preferably, the acrylic polymer is polymerized from a monomer mixture of about 5% to 30% by weight styrene, 10% to 40% by weight butyl methacrylate, 10% to 40% by weight butylacrylate, 15% to 50% by weight of hydroxyethyl acrylate or hydroxy propyl acrylate, all weight percentages based on the total weight of monomer solids. The acrylic polymer preferably has a weight average molecular weight of about 3,000 to 15,000. The acrylic polymer can be prepared by solution polymerization in which the monomer mixture, conventional solvents, polymerization initiators, such as 2,2'-azobis(isobutyronitrile) or peroxy acetate, are heated to about 70° to 175° C. for about 1 to 12 hours.

The binder component of the coating composition of the present invention can contain from about 0.01 % to 40% by weight of a polyester polymer which is the esterification product of an aliphatic or aromatic dicarboxylic acid, a polyol having at least three reactive hydroxyl groups, a diol, an aromatic or aliphatic cyclic anhydride and a cyclic alcohol. One preferred polyester is the esterification product of adipic acid, trimethylol propane, hexanediol, hexahydrophathalic anhydride and cyclohexane dimethylol.

The coating composition suitable for use in the present invention can contain a crosslinkable binder component and a crosslinking component, which are stored in separate containers and mixed prior to use to form a pot mix (so called two-pack coating composition), which is then applied as layer over a substrate. During the cure, the functionalities on the crosslinking component react with the functionalities on the crosslinkable binder component to form a coating on the substrate. Alternatively, the crosslinking component may be blocked, which can permit both the components to be stored in the same container. After application on a substrate surface, the layer is exposed to higher baking temperature, which unblocks the functionalities on the crosslinking component, which then react with the functionalities on the crosslinkable binder component to form a coating.

Some of the suitable crosslinking components include a polyisocyanate having on an average 2 to 10, preferably 2.5 to 6 and more preferably 3 to 4 isocyanate functionalities. The coating composition can include in the range of from 0.01 percent to 70 percent, preferably in the range of from 10 percent to 50 percent, and more preferably in the range of 20 percent to 40 percent of the polyisocyanate, the percentages being in weight percentages based on the total weight of composition solids.

Examples of suitable aliphatic polyisocyanates include aliphatic or cycloaliphatic di-, tri- or tetra-isocyanates, which may or may not be ethylenically unsaturated, such as 1,2-propylene diisocyanate, trimethylene diisocyanate, tetramethylene diisocyanate, 2,3-butylene diisocyanate, hexamethylene diisocyanate, octamethylene diisocyanate, 2,2,4-trimethyl hexamethylene diisocyanate, 2,4,4-trimethyl hexamethylene diisocyanate, dodecamethylene diisocyanate, omega -dipropyl ether diisocyanate, 1,3-cyclopentane diisocyanate, 1,2-cyclohexane diisocyanate, 1,4-cyclohexane diisocyanate, isophorone diisocyanate, 4-methyl-1,3-diisocyanatocyclohexane, trans- viny-lidene diisocyanate, dicyclohexylmethane-4,4'-diisocyanate, 3,3'-dimethyl-dicyclohexylmethane 4,4'-diisocyanate, and meta-tetramethylxylylene diisocyanate. The polyisocyanates can include those having isocyanurate structural units, such as the isocyanurate of hexamethylene diisocyanate and isocyanurate of isophorone diisocyanate, the adduct of 2 molecules of a diisocyanate, such as hexamethylene diisocyanate, uretidiones of hexamethylene diisocyanate, uretidiones of isophorone diisocyanate or isophorone diisocyanate; and diols, such as ethylene glycol, the adduct of 3 molecules of hexamethylene diisocyanate and 1 molecule of water (available under the trademark Desmodur® N of Bayer Corporation, Pittsburgh, Pennsylvania). The polyisocyanates can also include suitable aromatic polyisocyanates for use in coatings not requiring high levels of stability to UV light. Some of such suitable aromatic polyisocyanates can include toluene diisocyanate and diphenylmethane diisocyanate. If desired, the isocyanate functionalities of the polyisocyanate can be blocked with a monomeric alcohol to prevent premature crosslinking in a one-pack composition. Some of the suitable monomeric alcohols include methanol, ethanol, propanol, butanol, isopropanol, isobutanol, hexanol, 2-ethylhexanol and cyclohexanol.

The polyisocyanate containing coating composition preferably includes one or more catalysts to enhance crosslinking of the components during curing. Suitable catalysts include one or more organo tin catalysts, such as dibutyl tin dilaurate, dibutyl tin diacetate, stannous octoate, and dibutyl tin oxide. Dibutyl tin dilaurate is preferred. The amount of organo tin catalyst added generally ranges from 0.001 percent to 0.5 percent, preferably from 0.05 percent to 0.2 percent and more preferably from 0.01 percent to 0.1 percent, the percentages being in weight percentages based on the total weight of composition solids.

Some of the suitable crosslinking components also include a monomeric or polymeric melamine-formaldehyde resin (melamine) or a combination thereof. The coating composition can include in the range of from 0.1 percent to 40%, preferably in the range of from 15% to 35%, and most preferably in the range of 20 percent to 30 percent of the melamine, the percentages being in weight percentages based on the total weight of composition solids. The monomeric melamines include low molecular weight melamines which contain, on an average, three or more methylol groups etherized with a $C_1$ to $C_5$ monohydric alcohol such as methanol, n-butanol, or isobutanol per triazine nucleus, and have an average degree of condensation up to about 2 and preferably in the range of about 1.1 to about 1.8, and have a proportion of mononuclear species not less than about 50 percent by weight. By contrast the polymeric melamines have an average degree of condensation of more than 1.9. Some such suitable monomeric melamines include alkylated melamines, such as methylated, butylated, isobutylated melamines and mixtures thereof. Many of these suitable monomeric melamines are supplied commercially. For example, Cytec Industries Inc., West Patterson, New Jersey supplies Cymel® 301 (degree of polymerization of 1.5,95% methyl and 5% methylol), Cymel® 350 (degree of polymerization of 1.6,84% methyl and 16% methylol), 303, 325, 327 and 370, which are all monomeric melamines. Suitable polymeric melamines include high amino (partially alkylated, -N, -H) melamine known as Resimene® BMP5503 (molecular weight 690, polydispersity of 1.98, 56% butyl, 44% amino), which is supplied by Solutia Inc., St. Louis, Missouri, or Cymel®1158 provided by Cytec Industries Inc., West Patterson, New Jersey. Cytec Industries Inc. also supplies Cymel® 1130 @ 80 percent solids (degree of polymerization of 2.5), Cymel® 1133 (48% methyl, 4 % methylol and 48 % butyl), both of which are polymeric melamines.

Some of the suitable crosslinking components include urea formaldehyde polymers, such as methylated urea formaldehyde Resimene® 980 and butylated urea formaldehyde U-6329, which are supplied by Solutia Inc., St. Louis, Missouri.

The melamine containing coating composition preferably includes one or more catalysts to enhance crosslinking of the components on curing. Generally, the coating composition includes in the range of from 0.1 percent to 5 percent, preferably in the range of from 0.1 to 2 percent, more preferably in the range of from 0.5 percent to 2 percent and most preferably in the range of from 0.5 percent to 1.2 percent of the catalyst, the percentages being in weight percentage based on the total weight of composition solids. Some suitable catalysts include the conventional acid catalysts, such as aromatic sulfonic acids, for example dodecylbenzene sulfonic acid, paratoluenesulfonic acid and dinonylnaphthalene sulfonic acid, all of which are either unblocked or blocked with an amine, such as dimethyl oxazolidine and 2-amino-2-methyl-1-propanol, n,n-dimethylethanolamine or a combination thereof. Other acid catalysts that can be used are strong acids, such as phosphoric acids, more particularly phenyl acid phosphate, which may be unblocked or blocked with an amine.

Some of the crosslinkable binder components suitable for the aforedescribed isocyanate, melamine, urea formaldehyde crosslinking components include polymers and oligomers containing hydroxy functionalities; or groups that can form hydroxy groups on hydrolysis, such as carbonate and orthoester, amine functionality; or groups that can form amine functionality on hydrolysis, such as ketimine, aldimine or oxazoline and any combination of such functional groups.

Some of the suitable crosslinking components include a silane polymer or oligomer provided with at least one reactive silane group. The coating composition can include in the range of from 0.1 % to 45%, preferably in the range of from 10% to 40%, and most preferably in the range of from of 15% to 35% of the silane polymer, the percentages being in weight percentages based on the total weight of composition solids. The silane polymers suitable for use in the present invention have weight average molecular weight in the range of about 500 to 30,000, preferably in the range of about 750 to 25,000 and more preferably in the range of about 1000 to 7,500. All molecular weights disclosed herein are determined by gel permeation chromatography using a polystyrene standard. The silane polymer suitable herein is a polymerization product of about 30 to 95%, preferably 40 to 60%, by weight of ethylenically unsaturated non-silane containing monomers and about 5 to 70%, preferably 40 to 60%, by weight of ethylenically unsaturated silane containing monomers, based on the weight of the silane polymer. Suitable ethylenically unsaturated non-silane containing monomers are: alkyl acrylates, alkyl methacrylates and any mixtures thereof, where the alkyl groups have 1 to 12 carbon atoms, preferably 3 to 8 carbon atoms.

In addition to alkyl acrylates or methacrylates, other polymerizable non-silane-containing monomers, up to about 50% by weight of the polymer, can be used in the silane polymer for the purpose of achieving the desired properties such as hardness, appearance, and mar resistance. Exemplary of such other monomers are styrene, methyl styrene, acrylamide, acrylonitrile and methacrylonitrile. Styrene can be used in the range of 0.1 to 50%, preferably 5% to 30% by weight of the silane polymer. Typical examples of silane containing monomers for silane polymerization are the acrylatoalkoxy silanes, such as γ-macryloxypropyltrimethoxy silane and the methacrylatoalkoxy silanes, such as γ-methacryloxypropyltrimethoxy silane, and γ-methacryloxypropyltris(2-methoxyethoxy) silane. Other suitable alkoxy silane monomers are vinylalkoxy silanes, such as vinyltrimethoxy silane, vinyltriethoxy silane and vinyltris(2-methoxyethoxy) silane. Still other suitable silane containing monomers are acyloxysilanes, including acrylatoxy silane, methacrylatoxy silane and vinylacetoxy silanes, such as vinylmethyldiacetoxy silane, acrylatopropyltriacetoxy silane, and methacrylatopropyltriacetoxy silane. It is understood that combinations of the above-mentioned silane containing monomers are also suitable.

One preferred example of a silane polymer useful in the coating composition is polymerized from about 15 to 25% by weight styrene, about 30 to 60% by weight methacryloxypropyltrimethoxy silane, and about 25 to 50% by weight trimethylcyclohexyl methacrylate. Another preferred silane polymer contains about 30% by weight styrene, about 50 % by weight methacryloxypropyltrimethoxy silane, and about 20% by weight of nonfunctional acrylates or methacrylates such as trimethylcyclohexyl methacrylate, butyl acrylate, and iso-butyl methacrylate and any mixtures thereof.

Silane functional monomers also can be used in forming the silane polymer. These monomers are the reaction product of a silane containing compound, having a reactive group such as epoxide or isocyanate, with an ethylenically unsaturated non-silane containing monomer having a reactive group, typically a hydroxyl, acid or an epoxide group, that is co-reactive with the silane monomer.

Suitable silane oligomers, such as 1-trimethoxysilyl-4-trimethoxysilylmethylcyclohexane, useful in the present coating composition include, but are not limited to, those taught in US 5527936, which is incorporated herein by reference.

The silane containing coating composition preferably contains one or more catalysts to enhance crosslinking of the silane moieties of the silane polymer with itself and with other components of the composition. Typical of such catalysts are dibutyl tin dilaurate, dibutyl tin diacetate, dibutyl tin dioxide, dibutyl tin dioctoate, tin acetate, titanates such as tetraisopropyl titanate, tetrabutyl titanate (Tyzor® RTM supplied by DuPont Company, Wilmington, Delaware), aluminum titanate, aluminum chelates, and zirconium chelate. Amines and acids, or combinations thereof, are also useful for catalyzing silane bonding. Preferably, these catalysts are used in the amount of about 0.1 to 5.0% by weight of the composition.

Some of the crosslinkable binder components suitable for the aforedescribed silane crosslinking components include polymers and oligomers containing hydroxy functionality, or groups that can form hydroxy groups such as carbonate and orthoester, alkoxysilicates and any combination of such groups.

Some of the suitable crosslinking components include from about 0.1 to 40% by weight of an epoxy crosslinker containing at least two epoxy groups and having a molecular weight of less than about 2500. Some of the suitable epoxy crosslinker include sorbitol polyglycidyl ether, mannitol polyglycidyl ether, pentaerythritol polyglycidyl ether, glycerol polyglycidyl ether, low molecular weight epoxy resins, such as epoxy resins of epichlorohydrin and bisphenol-A, di- and polyglycidyl esters of polycarboxylic acids, polyglycidyl ethers of isocyanurates, such as DENECOL® EX301 polyglycidyl ether from Nagase in Japan; sorbitol polyglycidyl ether, such as DEC-358® polyglycidyl ether from Dixie Chemical in Texas, and di- and polyglycidyl esters of acids, such as ARALDITE® CY-184 polyglycidyl ester from Ciba-Geigy in New York, or XU-71950 polyglycidyl ester from Dow Chemical company in Michigan. Cycloaliphatic epoxies can also be used, such as ERL-4221 from Union Carbide.

The epoxy containing coating composition preferably includes one or more catalysts to enhance crosslinking of the components on curing. Generally, the coating composition includes in the range of from 0.1 percent to 5 percent, preferably in the range of from 0.1 to 2 percent, more preferably in the range of from 0.5 percent to 2 percent and most preferably in the range of from 0.5 percent to 1.2 percent of the catalyst, the percentages being in weight percentage based on the total weight of composition solids. Some suitable catalysts include tertiary amines such as triethylene diamine, bis(2-dimethyl aminoethyl)ether and N,N,N$^1$, N$^1$-tetramethylethylenediamine and onium compounds including quaternary phosphonium and quaternary ammonium. Examples of phosphonium catalysts which can be used in catalyst blends are benzyl triphenyl phosphonium chloride; ethyl triphenyl phosphonium bromide; tetra butyl phosphonium chloride; tetra butyl phosphonium bromide; benzyl triphenyl phosphonium iodide; benzyl triphenyl phosphonium bromide; and ethyl triphenyl phosphonium iodide.

Some of the suitable crosslinkable binder components suitable for the aforedescribed silane crosslinking components include polymers and oligomers, such as polycarboxylic acids, polyamines and polyamides.

The coating composition of the present invention can optionally contain, in the range of from 0.1 percent to 50 percent, a modifying resin, such as a well known non-aqueous dispersion (NAD), all percentages being based on the total weight of composition solids. The weight average molecular weight of the modifying resin generally varies in the range of from 20,000 to 100,000, preferably in the range of from 25,000 to 80,000 and more preferably in the range from 30,000 to 50,000.

The non-aqueous dispersion-type polymer is prepared by dispersion polymerizing at least one vinyl monomer in the presence of a polymer dispersion stabilizer and an organic solvent. The polymer dispersion stabilizer may be any of the known stabilizers used commonly in the field of non-aqueous dispersions.

If desired the coating composition can also include hollow glass beads, reinforcing fibers or a combination thereof. Preferably, the coating compositions contain 0.05 parts to 40 parts, preferably 0.1 parts to 30 parts, more preferably 0.2 parts to 25 parts of said glass beads based on the total weight of said composition.

The coating composition of the present invention can also contain conventional additives, such as, pigments, UV absorbers, stabilizers, rheology control agents, flow agents, metallic flakes, toughening agents and fillers. Such additional additives will, of course, depend upon the intended use of the coating composition. Fillers, pigments, and other additives that would adversely effect the clarity of the cured coating are typically not included if the composition is intended as a clear coating. It is understood that one or more of these conventional additives, such as pigments, can be added before, during or at the end of the agitating step. Preferably, the one or more of these additives can be added to the liquid component.

To improve weatherability of the clear finish of the coating composition, about 0.1 to 5% by weight, based on the weight of the composition solids, of an ultraviolet light stabilizer or a combination of ultraviolet light stabilizers and absorbers may be added. These stabilizers include ultraviolet light absorbers, screeners, quenchers and specific hindered amine light stabilizers. Also, about 0.1 to 5% by weight, based on the weight of the composition solids, of an antioxidant can be added. Most of the foregoing stabilizers are supplied by Ciba Specialty Chemicals, Tarrytown, New York.

The coating composition of the present invention can contain one or more organic solvents. Some of the suitable solvents include aromatic hydrocarbons, such as petroleum naphtha or xylenes; ketones such as methyl amyl ketone, methyl isobutyl ketone, methyl ethyl ketone or acetone; esters such as butyl acetate or hexyl acetate; and glycol ether esters, such as propylene glycol monomethyl ether acetate. The amount of organic solvent added depends upon the desired solids level as well as the desired amount of VOC of the composition.

The present invention is also directed to a method of producing a coating composition wherein a coating from said composition upon cure has improved chip resistance. The method includes:

contacting organic fibers with a medium comprising a liquid component and a solid component;

agitating the medium and the organic fibers for sufficient duration to transform said organic fibers into a micropulp dispersed in the medium wherein said micropulp is a fibrous organic material that includes an intermeshed combination of two or more of webbed, dendritic, branched, mushroomed or fibril structures and has a volume average length ranging from 0.01 to 50 micrometers;

separating the solid component from the medium to form a slurry; and

adding the slurry or an aliquot thereof to the coating composition.

If desired, the contacting step includes:

mixing the organic fibers with the liquid component of the medium to form a premix;

adding the premix to the solid component, which as discussed earlier, is preferably kept in an agitated state in an agitating device, such as an attritor or a mill, before the premix is added.

If desired, the aforedescribed slurry, itself, could also be used to form a coating on a substrate.

The present invention is also directed to a yet another method of producing a coating composition, wherein a coating from said composition upon cure has improved chip resistance. The method includes:

contacting first organic fibers with a first medium comprising a first liquid component and a first solid component, wherein the first liquid component comprises a first aqueous liquid, one or more first liquid polymers, fist organic solvent or a mixture thereof;

agitating the first medium and the first organic fibers to transform the first organic fibers into a first micropulp dispersed in the first medium;

contacting the first medium with second organic fibers and a second medium to form a blend, the second medium comprising a second liquid component and a second solid component, wherein the second liquid component comprises one or more second liquid polymers and a second aqueous liquid, second organic solvent or a mixture thereof;

agitating the blend to transform the second organic fibers into second micropulp dispersed in the blend;

separating the first and the second solid component from the blend to form a slurry wherein said first and second micropulps are fibrous organic materials that include an intermeshed combination of two or more of webbed, dendritic, branched, mushroomed or fibril structures and have a volume average length ranging from 0.01 to 50 micrometers; and

adding the slurry, or an aliquot thereof, to a binder component of the sprayable coating composition.

The present invention is also directed to still another method of producing a coating composition, wherein a coating from said composition upon cure has improved chip resistance. The method includes:

contacting first organic fibers with a first medium comprising a first liquid component and a first solid component, wherein the first liquid component comprises a first liquid polymer, first aqueous liquid, first organic solvent or a mixture thereof;

agitating the first medium to transform the first organic fibers into first micropulp dispersed in the first medium wherein said first micropulp is a fibrous organic material that includes an intermeshed combination of two or more of webbed, dendritic, branched, mushroomed or fibril structures;

separating the first solid component from the first liquid medium containing the first micropulp;

contacting the first medium with second organic fibers and a second medium to form a blend, the second medium comprising a second liquid component and a second solid component, wherein the second liquid component comprises one or more second liquid polymers and a second aqueous liquid, second organic solvent or a mixture thereof;

agitating the blend to transform the second organic fibers into second micropulp dispersed in the blend wherein said second micropulp is a fibrous organic material that includes an intermeshed combination of two or more of webbed, dendritic, branched, mushroomed or fibril structures and has a volume average length ranging from 0.01 to 50 micrometers;

separating the second solid component from the blend to form a slurry; and

adding the slurry, or an aliquot thereof, to a binder component of the coating composition.

If desired, the first organic fibers, the first solid component, the first organic solvent, and the first polymer can respectively be the same as the second organic fibers, the second solid component, the second organic solvent, and the second polymer. It is further contemplated that during the aforedescribed contacting steps, the first or second solid components can be added after the first or second organic fibers have been added to the first or second components, respectively. Furthermore, it is within the contemplation of the invention to add additional amounts of first or second organic fibers in stages during the foregoing agitating steps to increase the solids level of micropulp in the slurry.

Applicants have unexpectedly discovered that by transforming the organic fibers, in stages, in the presence of liquid polymers into the micropulp, the in-can viscosity of the coating composition can be increased while the viscosity under shear can be reduced. Thus, the resulting coating compositions are highly desirable since such compositions have reduced settling of the ingredients, such as pigments, during storage while still permitting efficient application of the compositions.

The present invention is also directed to a method of producing a coating on a substrate. The coating composition of the present invention can be supplied in the form of a two-pack coating composition or one pack depending on crosslink chemistry. Generally, a coating composition layer having a thickness in the range of 15 micrometers to 75 micrometers is applied over a substrate, such as an automotive body or an automotive body that has precoated layers such as electrocoat primer. The foregoing application step includes spraying, electrostatic spraying, roller coating, dipping or brushing. The layer after application is typically dried to reduce the solvent content from the layer and then cured at temperature ranging from ambient to 204°C. The cure under ambient conditions occurs in about 30 minutes to 24 hours, generally in about 30 minutes to 4 hours to form a coating on the substrate having the desired coating properties. It is understood that the actual curing time can depend upon the thickness of the applied layer, the cure temperature, humidity and on any additional mechanical aids, such as fans, that assist in continuously flowing air over the coated substrate to accelerate the cure rate. The dried layer of the composition, when formulated as a two pack coating composition, can be cured at elevated temperatures ranging from 50°C to 160°C in about 10 to 60 minutes. The dried layer of the composition, when formulated as a one-pack coating composition, can be cured at an elevated temperature ranging from 60°C to 200°C, preferably ranging from 80°C to 160°C, in about 10 to 60 minutes. It is understood that actual curing temperature would vary depending upon the catalyst and the amount thereof, thickness of the layer being cured and the blocked isocyanate functionalities of the melamine, the silane and/or the epoxy crosslinker utilized in the coating composition. The use of the foregoing curing step is particularly useful under OEM (Original Equipment Manufacture) conditions.

The coating composition can include pigment, hollow glass beads, reinforcing fibers or a combination thereof. The suitable substrates include an automotive body, road surface, walls, wood, cement surface, marine surfaces; coil coating; outdoor structures, such as bridges, towers, printed circuit boards, and fiberglass structures.

Applicants have discovered that by including the micropulp of the present invention in the coating compositions, a layer of such a composition exhibits improved anti-sag property, mottling resistance, flake control, or a combination thereof.

If desired, the micropulp can be incorporated in powder coating compositions, such as those described in US 5,928,577, 5,472,649, and 3,933,954, which are incorporated herein by reference. If desired, aqueous slurry of the micropulp can be incorporated in powder slurries described in BASF Application No. 98/27141 filed on 12/18/96, which is incorporated herein by reference.

Applicants have unexpectedly discovered that the micropulp of the present invention is well suited for use as a reinforcement and thixotrope in various polymers. It has been known that commercially available pulp can be used as a reinforcement and thixotrope in various polymers including polyester, epoxy and asphalt. Fumed silica is also widely used as a thixotrope in most polymers, but it has a number of deficiencies, such as, for example, the resulting viscosity of a resin filled with fumed silica can be permanently reduced by shear (e.g., mixing) or with time. The pulp has none of these deficiencies and is actually much more cost effective than fumed silica since it can replace fumed silica on about a 10 to 1 replacement ratio. However, despite the technical advantages and the cost effectiveness, the pulp has not replaced much of the fumed silica used commercially as a reinforcement and thixotrope. The primary reason is that the pulp is much too long and too coarse, and it tends not to disperse very well in most polymers. Due to the relatively large size of the fibers and their coarseness, the resulting coatings tend to have a textured, rough finish. These coatings are also difficult to apply, as the longer fibers tend to plug filters and spray guns. These commercial fibers are also more likely to separate from the resin than fumed silica. The micropulp produced by the present invention unexpectedly eliminates all the aforedescribed deficiencies observed with commercial pulps and is actually a more efficient thixotrope. The micropulp produced by the present invention unexpectedly eliminates all the aforedescribed deficiencies observed with commercial pulps. As a result, the micropulp of the present invention can be used as a reinforcement and thixotrope for polymers, such as polyester polymer, epoxy, polyurethane, and asphalt. One suitable micropulp is produced from Kevlar® pulp Merge 1 F543 supplied by DuPont Company, Wilmington, Delaware.

**Examples**

**Polymer 1**

A reactor was charged with 229.12 parts by weight of xylene and heated to reflux between 138°C to 142°C. A monomer premix of 73.64 parts by weight styrene, 98.19 parts by weight methyl methacrylate, 220.93 parts by weight isobutyl methacrylate, and 98.19 parts by weight 2-hydroxyethyl methacrylate were fed into the reactor simultaneously over three hours with an initiator premix composed of 11.78 parts by weight of a 75% weight solids t-butyl peroxyacetate initiator and 49.10 parts by weight xylene. Once this feed was completed, another premix composed of 2.95 parts by weight of 75% weight solids t-butyl peroxyacetate initiator and 49.10 parts by weight methyl ethyl ketone was fed into the reactor over 1 hour and held 1 hour at reflux. The resulting acrylic polymer was then cooled and filled out.

**Polymer 2**

In a reactor, 19.553 parts by weight xylene, 93.582 parts by weight pentaerythritol and 167.893 parts by weight benzoic acid were charged and heated to reflux of approximately 190°C. The batch was heated stepwise to 215°C and held until the acid number was a maximum of 33 on total batch. The batch was then cooled below 80° C. Then, 296.205 parts by weight neopentyl glycol, 142.804 parts by weight isophthalic acid, 127.294 parts by weight phthalic anhydride, 62.780 parts by weight adipic acid, and 15.261 parts by weight xylene were added to the reactor and heated to reflux of approximately 175°C. The batch was then heated to 215°C and water collected until an acid number of 3 to 7 was reached. The resulting polyester polymer was cooled to 80° C and thinned with 113.508 parts by weight ethyl acetate.

**Polymer 3**

Into a reactor, 116.411 parts by weight methyl methacrylate, 115.952 parts by weight n-butyl methacrylate, and 72.477 parts by weight toluene were loaded. The batch was heated to boiling @ 113°C (235°F) and refluxed for 20 minutes, then the heat was shut off. Then, 7.498 parts by weight 2-mercaptoethanol were added to the reactor followed by 7.500 parts by weight toluene. Into a feed tank (Feed 1), 85.200 parts by weight methyl methacrylate and 85.629 parts by weight n-butyl methacrylate were loaded and mixed. Into another feed tank (Feed 2), 1.152 parts by weight 2,2'-azobisisobutyronitrile and 60.294 parts by weight toluene were loaded. These two feeds were added to the reactor simultaneously, with Feed 1 fed in over 320 minutes at a rate of 0.534 parts/min. Heat was added as necessary to maintain reflux. A portion (19.90%) of Feed 2 was added during 200 minutes, 71.60% during the next 140 minutes, and the remaining 8.5% as a shot after a 340 minute continuous feed. Feed 1 tank was immediately rinsed with 4.000 parts of toluene, and the rinse was fed to the reactor. Feed 2 tank was then rinsed with 3.000 parts of toluene and the rinse was fed to the reactor, and then held at reflux for 10 minutes. Then, 207.414 parts by weight toluene were added to the reactor, brought to boiling and reflux, and toluene/water co-distilled until water content was 250 ppm. Desmodur® N75 BA/X isocyanate supplied by Bayer Corporation, Pittsburgh, Pennsylvania (63.784 parts by weight) was added to the reactor as quickly as possible followed by 5.000 parts by weight toluene. A premix of 1.000 parts by weight toluene and 0.088 parts by weight dibutyl tin dilaurate were added, followed by 1.000 parts by weight toluene. The batch was refluxed for 30 minutes at 117°C (243°F) and cooled to 102°C (216°F). Then, 3.251 parts by weight of ammonia was added to the batch over 1.5 hours, maintaining the pressure in the reactor between 68 KPa (10 psig) and 103 KPa (15 psig) and a batch temperature of 102°C (216°F). After a 1.5 hour ammoniation period, the batch was refluxed for 1 hour, then cooled to 49°C (120°F) and filtered out to produce the polymer.

**Slurry 1**

In a can, 147.99 grams of Polymer 1 @ 59.6 % weight solids, 293.01 grams of methyl amyl ketone, and 9.00 grams of Kevlar® pulp 1 F543 (supplied by DuPont Company, Wilmington, Delaware), which had been dried for 1 hour at 100°C, were added together and shaken by hand, resulting in a 2.00% weight solid Kevlar® premix (total weight solids of 21.60%). The premix was further mixed at high speed (750 rpm) on a High Speed Disperser (HSD) for 5 minutes until the premix had a loose, but still lumpy, consistency. A Union Process "01" attritor, (supplied by Union Process, Akron, Ohio) containing a solid component consisting of 1816 grams of 0.32 cm (1/8 inch) steel shot media was set up. With the cooling water to the attritor jacket turned on, approximately 350 grams of the premix was poured into the attritor and the spindle speed adjusted to 350 rpm. The mixture was agitated to attrite for 72 hours and then drained through a mesh screen to retain the steel shot. The fineness of the resulting slurry was less than or equal to 27.9 micrometers (1.1 mils).

**Slurry 2**

In a can, 145.42 grams of Polymer 1 @ 59.6 % weight solids, 287.93 grams of methyl amyl ketone, and 16.65 grams of Kevlar® pulp 1 F543 (supplied by DuPont Company, Wilmington, Delaware), which had been dried for 1 hour at 100°C, were added together and shaken by hand, resulting in a 3.70% weight solid Kevlar® premix (total weight solids of 22.96%). The premix was further mixed at high speed (750 rpm) on a High Speed Disperser (HSD) for 5 minutes until the premix had a loose, but still lumpy, consistency. A Union Process "01" attritor containing a solid component consisting of 1816 grams of 0.32 cm (1/8 inch) steel shot media was set up. With the cooling water to the attritor jacket turned on, approximately 350 grams of the premix was poured into the attritor and the spindle speed adjusted to 350 rpm. The mixture was agitated to attrite for 72 hours and then drained through a mesh screen to retain the steel shot. The fineness of the resulting slurry was greater than 101.6 micrometers (4.0 mils).

**Slurry 3**

In a can, 7087.50 grams of methyl amyl ketone and 412.50 grams of Kevlar® pulp 1 F543, which had been dried for 1 hour at 100°C, were mixed together on an air mixer, resulting in a 5.50% weight solids Kevlar® premix. The premix was further mixed at high speed (750 rpm) on a High Speed Disperser (HSD) for 5 minutes. A Union Process "1S" attritor containing a solid component consisting of 27240 grams of 0.32 cm (1/8 inch) steel shot media was set up. With the cooling water to the attritor jacket turned on, approximately 3000 grams of the slurry was poured into the attritor and the spindle speed adjusted to 350 rpm. The mixture was agitated to attrite for 72 hours and then drained through a mesh screen to retain the steel shot in the mill. The fineness reading of the resulting slurry was less than or equal to 25.4 micrometers (1.0 mil). The percent weight solids was run in triplicate on the slurry by adding between 3.10 to 3.16 grams slurry to an aluminum dish and then diluting with methyl amyl ketone. The aluminum dishes with sample/solvent were gently swirled to evenly coat the bottom of the aluminum dish. These samples were then heated at elevated temperature (110°C $\pm$ 10°C) for 60 minutes to drive off the volatiles. The resulting final specimen weights were averaged and the weight percent solids calculated. The final average % weight solids of the slurry was 6.60 %. The % weight solids was readjusted back to the theoretical % weight solids of 5.50 % with methyl amyl ketone.

**Slurry 4**

In a can, 1090.17 grams of Polymer 1 @ 59.6 % weight solids, 1019.38 grams of methyl amyl ketone, and 1205.45 grams of Slurry 3 were mixed on medium speed on an air mixer to give a 2.00% by weight solid Kevlar® blend (total weight solids of 21.60%). Half of the blend was set aside. A Union Process "01" attritor containing a solid component of 1816 grams of 0.32 cm (1/8 inch) steel shot media was set up. With the cooling water to the attritor jacket turned on, approximately 350 grams of the premix was poured into the attritor and the spindle speed adjusted to 350 rpm. The mixture was agitated to attrite for 72 hours and then drained through a mesh screen to retain the steel shot. The fineness of the resulting slurry was 0 micrometers.

**Slurry 5**

In a can, 1078.37 grams of Polymer 1 @ 59.6 % weight solids, 13.72 grams of methyl amyl ketone, and 2244.91 grams of Slurry 3 were mixed on medium speed on an air mixer to give a 3.70% by weight solid Kevlar® blend (total weight solids of 22.96%). Half of the blend was set aside. A Union Process "01 "attritor containing a solid component of 1816 grams of 0.32 cm (1/8 inch) steel shot media was set up. With the cooling water to the attritor jacket turned on, approximately 350 grams of the premix was poured into the attritor and the spindle speed adjusted to 350 rpm. The mixture was agitated to attrite for 72 hours and then drained through a mesh screen to retain the steel shot. The fineness of the resulting slurry was 0 micrometers.

**Slurry 6**

In a can, 6352.71 grams of Polymer 2 @ 85.00 % weight solids, 7340.57 grams of methyl amyl ketone, 516.73 grams of Polymer 3 @ 55.00 % wt. solids, and 290.00 grams of Kevlar® pulp 1 F543, which had been dried for 1 hour at 100°C, were mixed together at medium speed with an air mixer, resulting in a 2.00% weight solid Kevlar® premix. The premix was further mixed at high speed (750 rpm) on an HSD for 5 minutes until the premix had a loose, but still lumpy, consistency. A Union Process "10S" attritor containing a solid component of 360 lbs. of 0.32 cm (1/8 inch) steel shot media was set up. With the cooling water to the attritor jacket turned on, the premix was poured into the attritor and the spindle speed adjusted to 185 rpm. The mixture was agitated to attrite for 72 hours and then drained through a mesh screen to retain the steel shot in the mill. On a 254 micrometers (10 mils) drawdown on glass of the resulting slurry, there was a coarse, but uniform, texture.

**Slurry 7**

In a can, 2835.00 grams of 8685S lmron 5000® Reducer and 165.00 grams of Kevlar® pulp 1 F543, which had been dried for 1 hour at 100°C, were added together and shaken by hand, resulting in a 5.50% weight solid Kevlar® premix. The premix was further mixed at high speed (750 rpm) on an HSD for 5 minutes. A Union Process "1S" attritor containing 27240 grams of a solid component of 0.32 cm (1/8 inch) steel shot media was set up. With the cooling water to the attritor jacket turned on, the premix was poured into the attritor and the spindle speed adjusted to 350 rpm. The mixture was agitated to attrite for 72 hours and then drained through a mesh screen to retain the steel shot in the mill. On a 254 micrometers (10 mils) drawdown on glass of the resulting slurry, there was a coarse but uniform texture. The solids weight percentage was run in triplicate on the dispersion by the process described in Slurry 3 earlier. The final average percent weight solids was 6.88, which was adjusted back to the theoretical % weight solids of 5.50 % with 8685S lmron 5000® Reducer.

**Slurry 8**

In a can, 425.25 grams of methyl amyl ketone and 24.75 grams of Celanese Vectran® HS Pulp EFT1063-178 supplied by Engineering Fibers Technology, Shelton, Connecticut, which had been dried for 2 hours at 100°C, were added together and shaken by hand, resulting in a 5.50% weight solid Vectran® premix. The premix was further mixed at high speed (750 rpm) on an HSD for 5 minutes. A Union Process "01" attritor containing a solid component of 1816 grams of 0.32 cm (1/8 inch) steel shot media was set up. With the cooling water to the attritor jacket turned on, approximately 350 grams of the premix was poured into the attritor and the spindle speed adjusted to 500 rpm. The mixture was agitated to attrite for 96 hours and then drained through a mesh screen to retain the steel shot. The fineness of the resulting slurry was less than or equal to 78.7 micrometers (3.1 mils). The solids weight percentage was run in triplicate on the slurry by the process describe in Slurry 3 earlier. The final average percent weight solids was 6.62, which was adjusted back to the theoretical % weight solids of 5.50 % with methyl amyl ketone.

**Slurry 9**

In a quart can, 425.25 grams of methyl amyl ketone and 24.75 grams of Sterling Acrylic Pulp CFF (supplied by Sterling Fibers Inc., Pace, Florida), which had been dried for 1 hour at 100°C were added together and shaken by hand, resulting in a 5.50% weight solid Sterling premix. The premix was further mixed at high speed (750 rpm) on an HSD for 5 minutes. A Union Process "01" attritor containing a solid component of 1816 grams of 0.32 cm (1/8 inch) steel shot media was set up. With the cooling water to the attritor jacket turned on, approximately 350 grams of the premix was poured into the attritor and the spindle speed adjusted to 500 rpm. The mixture was agitated to attrite for 96 hours and then drained through a mesh screen to retain the steel shot. The fineness of the resulting slurry was less than or equal to 76.2 micrometers (3.0 mils). The solids weight percentage was run in triplicate on the slurry by the process describe in Slurry 3 earlier. The final average percent weight solids was 6.23, which was adjusted back to the theoretical % weight solids of 5.50 % with methyl amyl ketone.

**Slurry 10**

In a can, 425.25 grams of methyl amyl ketone and 24.75 grams of Nylon floc (N6,6 nylon of 1.5 dpf, 50/1000 supplied by DuPont Company, Wilmington, Delaware), which had been dried for 1 hour at 100°C, were added together and shaken by hand, resulting in a 5.50% weight solid Nylon premix. The premix was further mixed at high speed (750 rpm) on an HSD for 5 minutes. A Union Process "01" attritor containing a solid component of 1816 grams of 0.32 cm (1/8 inch) steel shot media was set up. With the cooling water to the attritor jacket turned on, approximately 350 grams of the premix was poured into the attritor and the spindle speed adjusted to 500 rpm. The mixture was agitated to attrite for 96 hours and then drained through a mesh screen to retain the steel shot. The fineness of the resulting slurry was 53.3 (2.1 mils) to 55.9 micrometers (2.2 mils). The solids weight percentage was run in triplicate on the slurry by the process describe in Slurry 3 earlier. The final average percent weight solids was 5.93, which was adjusted back to the theoretical % weight solids of 5.50 % with methyl amyl ketone.

**Slurry 11**

In a can, 147.99 grams of Polymer 1, 293.01 grams methyl amyl ketone, and 9.00 grams of Celanese Vectran® HS Pulp EFT1063-178 supplied by Engineering Fibers Technology, Shelton, Connecticut, which had been dried for 2 hours at 100°C, were added together and shaken by hand, resulting in a 2.00% weight solid Vectran® premix (total weight solids of 21.60 %). The premix was further mixed at high speed (750 rpm) on an HSD for 5 minutes until the premix had a loose, but still lumpy, consistency. A Union Process "01" attritor containing a solid component of 1816 grams of 0.32 cm (1/8 inch) steel shot media was set up. With the cooling water to the attritor jacket turned on, approximately 350 grams of the premix was poured into the attritor and the spindle speed adjusted to 500 rpm. The mixture was agitated to attrite for 96 hours and then drained through a mesh screen to retain the steel shot. The fineness of the resulting slurry was less than or equal to 20.3 micrometers (0.8 mils). The solids weight percentage was run in triplicate on the slurry by the process describe in Slurry 3 earlier. The final average percent weight solids was 23.62, which was adjusted back to the theoretical % weight solids of 21.60 % with methyl amyl ketone.

**Slurry 12**

In a can, 147.99 grams of Polymer 1, 293.01 grams methyl amyl ketone, and 9.00 grams of Sterling Acrylic Pulp CFF (supplied Sterling Fibers Inc, Pace, Florida), which had been dried for 1 hour at 100°C, were added together and shaken by hand, resulting in a 2.00% weight solid Sterling premix (total weight solids of 21.60 %). The premix was further mixed at high speed (750 rpm) on an HSD for 5 minutes until the premix had a loose, but still lumpy, consistency. A Union Process "01" attritor containing a solid component of 1816 grams of 0.32 cm (1/8 inch) steel shot media was set up. With the cooling water to the attritor jacket turned on, approximately 350 grams of the premix was poured into the attritor and the spindle speed adjusted to 500 rpm. The mixture was agitated to attrite for 96 hours and then drained through a mesh screen to retain the steel shot. The fineness of the resulting slurry was 0 micrometers. The solids weight percentage was run in triplicate on the slurry by the process describe in Slurry 3 earlier. The final average percent weight solids was 23.62, which was adjusted back to the theoretical % weight solids of 21.60 % with methyl amyl ketone.

**Slurry 13**

In a can, 147.99 grams of Polymer 1, 293.01 grams methyl amyl ketone, and 9.00 grams of Nylon floc (N6,6 nylon of 1.5 dpf, 50/1000 supplied by DuPont Company, Wilmington, Delaware), which had been dried for 1 hour at 100°C, were added together and shaken by hand, resulting in a 2.00% weight solid Nylon premix (total weight solids of 21.60 %). The premix was further mixed at high speed (750 rpm) on an HSD for 5 minutes until the premix had a loose, but still lumpy, consistency. A Union Process "01" attritor containing a solid component of 1816 grams of 0.32 cm (1/8 inch) steel shot media was set up. With the cooling water to the attritor jacket turned on, approximately 350 grams of the premix was poured into the attritor and the spindle speed adjusted to 500 rpm. The mixture was agitated to attrite for 96 hours and then drained through a mesh screen to retain the steel shot. The fineness of the resulting slurry was less than or equal to 71.1 micrometers (2.8 mils). The solids weight percentage was run in triplicate on the slurry by the process describe in Slurry 3 earlier. The final average percent weight solids was 23.66, which was adjusted back to the theoretical % weight solids of 21.60 % with methyl amyl ketone.

**Slurry 14**

In a can, 166.25 grams of n-butanol, 166.25 grams of methyl i-butyl ketone and 17.50 grams of Kevlar® pulp 1 F543, which had been dried for 1 hour at 100°C, were mixed together. A Union Process "01" attritor, containing a solid component consisting of 1816 grams of 3.175 mm (1/8 inch) steel shot media was set up. With the cooling water to the attritor jacket turned on, approximately 300 grams of the slurry was poured into the attritor and the spindle speed adjusted to 350 rpm. The mixture was agitated to attrite for 24 hours and then drained through a mesh screen to retain the steel shot. The solids weight percentage was run in triplicate on the slurry by the process describe in Slurry 3 earlier. The final average percent weight solids was 5%. **Slurry 15**

In a can, 2792.57 grams of Polymer 1 @ 59.6 % weight solids, 5869.27 grams methyl amyl ketone, and 138.16 grams of Kevlar® pulp 1 F543 (supplied by DuPont Company, Wilmington, Delaware), which had been dried for 1 hour at 100°C, were added together and mixed on an air mixer, resulting in a 1.57% weight solid Kevlar® premix (total weight solids of 20.48%). The premix was further mixed at high speed (750 rpm) on a High Speed Disperser (HSD) for 5 minutes until the premix had a loose, but still lumpy, consistency. A Union Process "10S" attritor containing a solid component consisting of 163.3 kgs (360 lbs) of 0.32 cm (1/8 inch) steel shot media was set up. With the cooling water to the attritor jacket turned on, the premix was poured into the attritor and the spindle speed adjusted to 185 rpm. The mixture was agitated to attrite for 24 hours and then drained through a mesh screen to retain the steel shot in the mill. The fineness of the resulting slurry was less than or equal to 10.2 micrometers (0.4 mils).

**Binder Component A**

The binder component was prepared by mixing together, with an air mixer, 95.53 grams of ethyl acetate, 85.06 grams of ethylene glycol monobutyl ether acetate, 33.39 grams of bis(1,2,2,6,6-pentamethyl-4-piperidinyl) sebacate (Tinuvin® 292 supplied by Ciba Specialty Chemicals), 0.22 grams of a 50.01 % solution of fluoroaliphatic polymeric esters (Fluorad® FC-430 supplied by 3M Corporation), 16.76 grams of a 2.00% solution of dibutyl tin dilaurate, and 1621.04 grams of Polymer 2 @ 85.00 % weight solids.

**Binder Component B**

The binder component was prepared by mixing together, with an air mixer, 1665.34 grams of ethylene glycol monobutyl ether acetate, 228.79 grams of bis(1,2,2,6,6-pentamethyl-4-piperidinyl) sebacate (Tinuvin® 292 supplied by Ciba Specialty Chemicals), 228.79 grams of 2(2'-hydroxy-3,5'-diter-amylphenyl) benzotriazole (Tinuvin® 328 supplied by Ciba Specialty Chemicals), 2.42 grams of a 50.01 % solution of fluoroaliphatic polymeric esters (Fluorad® FC-430 supplied by 3M Corporation), 163.32 grams of a 2.00% solution of dibutyl tin dilaurate, 14539.42 grams of Polymer 2 @ 85.00 % weight solids, and 1771.92 grams of ethyl acetate.

**Binder Component C**

The binder component was prepared by mixing together, with an air mixer, 2109.53 grams of Slurry 6, 158.79 grams of ethylene glycol monobutyl ether acetate, 94.17 grams of bis(1,2,2,6,6-pentamethyl-4-piperidinyl) sebacate (Tinuvin® 292 supplied by Ciba Specialty Chemicals), 94.17 grams of 2(2'-hydroxy-3,5'-di-ter-amylphenyl) benzotriazole (Tinuvin® 328 supplied by Ciba Specialty Chemicals), 1.00 grams of a 50.01 % solution of fluoroaliphatic polymeric esters (Fluorad® FC-430 supplied by 3M Corporation), 67.22 grams of a 2.00% solution of dibutyl tin dilaurate, 4962.16 grams of Polymer 2 @ 85.00 % weight solids, and 168.97 grams of ethyl acetate.

**Basecoat Formulation**

The following ingredients were added, under moderate stirring, in the following order. All amounts are in grams:

| Ingredients | Amount | Supplier |
|---|---|---|
| Branched acrylic resin* | 122.72 | |
| Cymel® 1168 melamine resin | 153.45 | Cytec Industries |
| Nacure® XP-221 | 10.43 | King Industries |
| Polyester Resin** | 99.30 | |
| Metacure® T-1 Catalyst | 18.57 | Air Products |
| Standard commercial additive package including rheology, stabilizers, flow additives and pigmentation*** | 463.33 | |
| Total | 777.78 | |

Theoretical Binder Solids: 50.7%
Theoretical non-Volatile Solids: 63.3%
* Based on Example 3 at columns 13 and 14 of US Patent 5244959.
** Based on Example 4 at column 6 of US Patent 4442269.
*** Primary pigmentation for this paint was Perrindo Maroon R-6436 (Bayer Corporation), Russet 459Z/MND and Super Copper 359Z/MND (both from Engelhard Minerals and Chemicals) in a pigment ratio of 1.24/1.37/1.00 and a pigment/binder ratio of 0.27.

**Performance of Primers**

**Example 1 (Control)**

A Primer was prepared by mixing together 600 grams of 615S Variprime® Self-etching primer with 400 grams of 616S Converter, both supplied by DuPont Company, Wilmington, Delaware.

**Example 2**

The primer of Example 1 was mixed with 17.50 grams of Slurry 3 to produce Example 2.

**Example 3 (Control)**

A two-pack primer was prepared by mixing together 954.40 grams 4004S Ultra Productive 2K Primer-Filler (Gray), 85.31 grams of 1085S ChromaSystem® Mid-Temp Reducer, and 143.40 grams of 4075S Ultra Productive Mid Temp Activator, all supplied by DuPont Company, Wilmington, Delaware.

### Example 4

A two-pack primer was prepared by mixing together 954.40 grams 4004S Ultra Productive 2K Primer-Filler (Gray), 90.27 grams of Slurry 3, and 143.40 grams of 4075S Ultra Productive Mid Temp Activator.

### Preparation of Test Panels

ChromaBase® Basecoat color code B8713K Alternate A was prepared and reduced 1 to 1 by volume with 7175S Mid Temp ChromaSystem® Basemaker®. Two sets of cold rolled steel panels (sets 1 and 2) were sanded with Norton 80-D sandpaper and cleaned twice with DuPont 3900S First Klean™. Panel 1 set (Control) was coated with Example 1 followed by Example 3 (Controls). Panel 2 set was coated with Example 2 followed by Example 4. The ChromaBase® Basecoat described above was then applied to the panels, followed by ChromaClear® Multi- V-7500S (all layers were applied as per the instructions in the ChromaSystem™ Tech Manual). The panels were baked at 140°F for 30 minutes and then air-dried for 7 days at 25°C and 50% relative humidity. All the aforedescribed components were supplied by DuPont Company, Wilmington, Delaware.

### Gravelometer Testing

The coated panels were tested for their chip resistance under ASTM-D-3170-87 using a 55 degree panel angle with panels and stones kept in the freezer for a minimum of 2 hours prior to chipping. One set of Panels 1 and 2 were tested with 1 pint and 3 pints of stones after a 30 minute @ 60°C (140°F) bake then air dried for an additional 7 days (After Air Dry). The second set of Panels 1 and 2 were tested with 1 pint and 3 pints of stones after baking for 30 minutes at 60°C (140°F) then air dried for an additional 7 days followed by an additional 96 hours in a humidity cabinet (ASTM-D-2247-99) at 100% relative humidity). The results are shown in Table 1 below:

**Table 1**

| Primers | After Air Dry | | After Humidity Exposure | |
|---|---|---|---|---|
| | 1 Pint | 3 Pints | 1 Pint | 3 Pints |
| Panel 1 (Control) | 6 | 5- | 5+ | 5+ |
| Panel 2 | 7 | 6 | 7 | 7 |

Table 1 clearly shows that the presence of the slurry of the present invention in primers enhances the chip resistance of the resultant coatings.

### Performance of Clearcoats

### Example 5 (Control)

A clear coating composition was prepared by mixing together 714.0 grams of V-7500S ChromaClear® V-Series Multi-Use with 194.5 grams of V-7575S Panel Activator-Reducer.

### Example 6

The composition of Example 5 was mixed with 47.1 grams of Slurry 3 to produce Example 6.

### Preparation of Test Panels

ChromaPremier® Basecoat color code B8713F Alternate A was prepared and reduced 1 to 1 by volume with 7175S Mid Temp ChromaSystem® Basemaker®. Cold rolled steel panels were sanded with Norton 80-D sandpaper and cleaned twice with DuPont 3900S First Klean™. These panels were then coated with 615S Variprime® Self-etching primer and 4004S Ultra Productive 2K Primer-Filler (Gray) and then coated with ChromaPremier® Basecoat described above followed by topcoating with clearcoats of Examples 5 and 6 (all layers were applied as per the instructions in the ChromaSystem™ Tech Manual). The panels were then baked at 60°C (140°F) for 30 minutes and then air-dried for an additional 7 days at 25°C and 50% relative humidity. All the aforedescribed components were supplied by DuPont Company, Wilmington, Delaware.

**Gravelometer Testing**

The examples were tested for chip resistance by using the aforedescribed gravelometer test. The results are shown in Table 2 below:

**Table 2**

| Clearcoats | After Air Dry (1pt/3pts) | After Humidity Exposure (1pt/3pts) |
|---|---|---|
| Example 5 (Control) | 3/2 | 0/0 |
| Example 6 | 4/4 | 4/4 |

Table 2 clearly shows that the presence of the slurry of the present invention in clear coating compositions dramatically improves the chip resistance of the resultant coatings.

**Gloss and Distinctness of Image (DOI)**

Clearcoated panels of Examples 5 and 6 were also tested for their gloss (using a BYK-Gardner glossmeter) and DOI (using a Dorigon II meter). The results are shown in Table 3 below:

**Table 3**

| Clearcoats | 20° Gloss | 60° Gloss | DOI |
|---|---|---|---|
| Example 5 (Control) | 87.1 | 92.9 | 97.6 |
| Example 6 | 88.2 | 93.2 | 98.2 |

Table 3 clearly shows that the presence of the slurry of the present invention in clear coating compositions does not appreciably affect the gloss and DOI, while dramatically improving in the chip resistance of the resultant coatings.

**Coating Hardness**

Electrocoated, unpolished steel panels supplied by ACT (panels were scuffed with a very fine 3M ScotchBrite pad and cleaned with DuPont 3001 S Final Klean™ using paper towels) were clearcoated, per the instructions in the ChromaSystem™ Tech Manual for V-7500S ChromaClear® V-Series Multi-Use, with Examples 5 and 6 and tested for their hardness by using the Fischerscope H100 micro-hardness test (the Knoop hardness being tested by the cycle used is similar to ASTM D 1474 and the Ford laboratory test method BI 112-02. The Fisherscope H 100 test is routinely used to determine Universal hardness according to VDE/VDI guideline 2616). The results are shown in Table 4 below:

**Table 4**

| Clearcoats | Hardness (corrected in N/mm$^2$) | % Relative Elastic Recovery |
|---|---|---|
| Example 5 (Control) | 65 | 22.76 |
| Example 6 | 118 | 35.50 |

Table 4 clearly shows that the presence of the slurry of the present invention in clear coating compositions not only improves coating hardness but also indicates improved elastic recovery.

**Coating Scratch Resistance**

Electrocoated, unpolished steel panels supplied by ACT (panels were scuffed with a very fine 3M ScotchBrite pad and cleaned with DuPont 3001S Final Klean™ using paper towels) were clearcoated, per the instructions in the ChromaSystem™ Tech Manual for V-7500S ChromaClear® V-Series Multi-Use, with Examples 5 and 6 and tested for their scratch resistance on the Nano-Scratch Tester (CSEM Nano-Scratch Tester® from CSEM Instruments SA, Switzerland). The applied pre-scan and post-scan forces were 0.1 milli-Newtons (mN). The scratch rate was 3 mm/min, and loading rate was 40 mN/min. The indentor tip was a Diamond Rockwell-type with a 2 μm radius. The plastic resistance was evaluated at 5 mN applied normal force. The results are shown in Table 5 below:

**Table 5**

| Clearcoats | Fracture Resistance (mN) | Plastic Resistance (mN/$\mu$m) |
|---|---|---|
| Example 5 (Control) | 10.70 | 7.030 |
| Example 6 | 10.41 | 10.495 |

Table 5 clearly shows that the presence of the slurry of the present invention in clear coating compositions improves plastic resistance, thus making the coating more amenable to recovery after deformation.

**Coating Appearance Testing**

**Example 7 (Control)**

A composite green metallic tint was prepared by mixing 9486.72 grams of 506H Green High Strength L/F M/M Tint, 966.84 grams of 513H Magenta High Strength L/F M/M Tint, 2191.50 grams of 522H Extra Coarse Aluminum M/M Tint and 2918.09 grams of 504H Blue High Strength L/F M/M Tint and blending on an air mixer. Paint of Example 7 was prepared by mixing together, on an air mixer, 128.56 grams of Binder Component A, 1285.26 grams of Binder Component B, 933.39 grams of the aforedescribed composite green metallic tint, and 152.79 grams of 8685S Imron® 5000 Reducer. For sprayout, 371.60 grams of Example 7 was mixed with 128.40 grams of 193S Imron® 5000 Activator and air sprayed according to the instructions in the DuPont OEM/Fleet Finishes Technical Manual on test panels (aluminum panels scuffed with a very fine 3M ScotchBrite pad and cleaned twice with DuPont 3900S First Klean™). The items listed herein were supplied by DuPont Company, Wilmington, Delaware.

**Example 8**

Paint of Example 8 was prepared by mixing together on an air mixer, 1414.05 grams of Binder Component C, 924.64 grams of the composite green metallic tint described above in Example 7, and 161.31 grams of 8685S Imron® 5000 Reducer. For sprayout, 370.44 grams of Example 8 was mixed with 129.57 grams of 193S Imron® 5000 Activator and air sprayed according to the instructions in the DuPont OEM/Fleet Finishes Technical Manual on test panels (aluminum panels scuffed with a very fine 3M ScotchBrite pad and cleaned twice with DuPont 3900S First Klean™). The items listed herein were supplied by DuPont Company, Wilmington, Delaware.

**Mottling Resistance**

The test panels from Examples 7 and 8 were analyzed for their mottling resistance on a rating scale of 0 to 3 (0 = No mottling observed, 1 = Slight mottling observed, 2 = Moderate mottling observed, 3 = Severe mottling observed). The results are shown in Table 6 below:

**Table 6**

| Paints | Mottling Rating |
|---|---|
| Example 7 (Control) | 3 |
| Example 8 | 1 |

Table 6 clearly shows that the presence of the slurry of the present invention in paints dramatically improves the mottling resistance of the resultant coatings.

**Coating Appearance, Flop, Gloss and DOI**

The test panels from Examples 7 and 8 were analyzed for their lightness values at three different angles by using the Metallic Absolute Colorimeter supplied by DuPont Company, Wilmington, Delaware. The results are shown in Table 7 below:

**Table 7**

| Paints | Near Spec L | Flat L | High L |
|---|---|---|---|
| Example 7 (Control) | 25.70 | 19.16 | 13.75 |
| Example 8 | 46.49 | 25.53 | 13.62 |

The test panels from Examples 7 and 8 were analyzed for their flop readings by using the Metallic Absolute Colorimeter made by DuPont Company, Wilmington, Delaware. The results are shown in Table 8 below (the higher the flop reading, the better the flop of the metallic paint):

**Table 8**

| Paints | Flop |
|---|---|
| Example 7 (Control) | 3.32 |
| Example 8 | 7.96 |

The test panels from Examples 7 and 8 were analyzed for their gloss using a BYK-Gardner glossmeter and for their DOI by using a Dorigon II meter. The results are shown in Table 9 below (the higher the readings, the better the gloss and DOI of the metallic paint):

**Table 9**

| Paints | 20° Gloss | 60° Gloss | DOI |
|---|---|---|---|
| Example 7 (Control) | 67.7 | 89.7 | 65.9 |
| Example 8 | 75.6 | 93.1 | 78.7 |

The test panels from Examples 7 and 8 were analyzed for the degree of waviness observed on coatings by using a BYK-Gardner Wave Scan meter. The results are shown in Table 10 below (the lower the readings, the better the paint flow out and appearance):

**Table 10**

| Paints | Long Wave | Short Wave |
|---|---|---|
| Example 7 (Control) | 10.3 | 28.1 |
| Example 8 | 13.2 | 23.5 |

As seen form Tables 6 though 10, the color readings instrumentally demonstrate the improvement in metallic flake control of the single stage paint containing the slurry of the present invention. Gloss and DOI were not compromised by the addition of slurry. In addition, the WaveScan short wave readings remained low for the single stage paint containing the slurry, indicating good flow out and appearance.

**Coating Abrasion Resistance**

**Example 9 (Control)**

A white single stage paint was prepared by blending, on an air mixer, 114.71 grams of 573H Imron® 5000 Binder, 54.60 grams of 574H Imron® 5000 Metallic Binder, 0.16 grams of 506H Green High Strength L/F M/M Tint, 1.66 grams of 515H Yellow Oxide High Strength L/F M/M Tint, 4.38 grams of 501 H Black High Strength (LS) L/F M/M Tint, and 624.48 grams of 516H White High Solids L/F M/M Tint, the components being available from DuPont Company, Wilmington, Delaware. An activated Example 9 (Control) paint was prepared by blending and shaking 223.64 grams of the aforedescribed white single stage paint, 17.38 grams of 8685S Imron® 5000 Reducer, and 58.98 grams of 193S Imron® 5000 Activator and then air spraying according to the instructions in the DuPont OEM/Fleet Finishes Technical Manual on Taber Abrasion test panels (Specimen Plates, Taber Catalog No. S-16, Testing Machines, Inc., 400 Bay View Ave., Amityville, NY).

### Example 10

An activated Example 10 was prepared by blending and shaking 222.88 grams of the white single stage paint described in Example 9 above, 18.34 grams of Slurry 7, and 58.78 grams of 193S Imron® 5000 Activator and air spraying according to the instructions in the DuPont OEM/Fleet Finishes Technical Manual on Taber Abrasion test panels (Specimen Plates, Taber Catalog No. S-16, Testing Machines, Inc., 400 Bay View Ave., Amityville, NY).

The test panels coated with paints of Examples 9 and 10 were subjected to the Tabor Abrasion Resistance Test as per the Tabor Model 503 Abraser Instruction Manual. The lesser the weight loss, the greater will be the abrasion resistance. The percent weight loss at various cycles, using a 500 gram test weight with a CS-10 Calibrase Wheel (Taber Catalog No. Calibrase Wheel CS-10, Testing Machines, Inc., 400 Bay View Ave., Amityville, NY), are shown in Table 11 below:

**Table 11**

| Tabor Cycles | % Weight Loss | |
| --- | --- | --- |
| | Example 9 (Control) | Example 10 |
| 500 | 0.03 | 0.03 |
| 1000 | 0.07 | 0.05 |
| 1500 | 0.10 | 0.08 |
| 2000 | 0.13 | 0.10 |
| 2500 | 0.16 | 0.13 |
| 3000 | 0.19 | 0.16 |
| 3500 | 0.20 | 0.18 |
| 4000 | 0.25 | 0.21 |

Table 11 clearly shows that the presence of the slurry of the present invention in paints shows improvement in the abrasion resistance of the resultant coatings.

### Example 11

The following ingredients were mixed under moderate stirring. After all ingredients were added, the paint was stirred for an additional 2 hours.

| Ingredients | Paint A (Comparative) no micropulp | Paint B 0.54% micropulp |
| --- | --- | --- |
| Basecoat Formulation | 260.0 | 260.0 |
| Slurry 14 | 0.0 | 31.1 |
| n-butanol | 15.5 | 0.0 |
| Methyl i-butanol ketone | 15.5 | 0.0 |
| Total | 291.0 | 291.1 |
| Theoretical non-volatile solids = 55.75 % | | |

Layers of paints A and B were applied to a cold-rolled steel panel previously coated with a standard light red solvent borne-compatible melamine/polyester primer surfacer. Each paint layer was applied to a test panel by conventional air-atomized hand application to a film build of 28 microns to 33 microns (1.1 mil to 1.3 mil) basecoat, flashed for 6 minutes, then clear coated with a commercially available one-component enamel clearcoat (available from DuPont-Herberts Automotive Systems as Gen IV™ clear coat). The clear-coated panels were then baked for 30 minutes at 141 °C (285°F) in an electric oven to form first coating of a basecoat.

The test panels prepared in step above were once-again coated with the paints A and B. The new paint layers were applied to 25 microns to 33 microns (1.0 mil to 1.3 mil) basecoat by the same conventional air-atomized hand application. The panels were flashed for 6 minutes and again clear coated with a commercially available one-component enamel clearcoat (available from DuPont-Herberts Automotive Systems as Gen IV™ clear coat). The panels were baked for 30 minutes at 141°C (285°F) in an electric oven.

The coated panels were tested for chip resistance according to the standard method outlined in the Society of Automotive Engineers specification, SAE J400. The test was conducted at room temperature with two pints of standard gravel and at a panel angle of 45 degrees to the horizontal. The chip resistance results were analyzed by counting the number of chips that were A) larger than 2 mm and B) deep enough to have removed both layers of basecoat and show the light red primer surfacer layer.

The coated panels were also tested for appearance using a Quality Measurement System (QMS) analysis available from Autospec, Inc. Ann Arbor, Michigan. The appearance numbers reported below are the Combined Appearance Rating, which blends measurements of Gloss, Distinctiveness of Image (DOI), and Orange Peel texture. The results are shown in Table 12 below:

**Table 12**

| Paint | Number of Objectionable Chips | Combined Appearance |
|---|---|---|
| Comparative Paint A (no micropulp) | 10 | 46.4* |
| Paint B (0.54% micropulp) | 0 | 50.9* |
| * For this method of paint application, these numbers are considered equal. | | |

From Table 12, it is readily apparent that the presence of micropulp of the present invention in an OEM solvent borne paint improves its chip resistance with no loss of appearance.

**Rheological Analysis of Slurries**

The rheological data was collected on the Slurries 1, 3, 4, Example 7 (Unactivated Control) and Example 8 (Unactivated) by using Rheometric Scientific ARES Fluids Spectrometer (Rheometric Scientific, Piscataway, New Jersey). Several different measurement geometries (couette, 25 mm parallel plates, or 50 mm parallel plates) were used, depending upon the sample characteristics. The steady shear viscosity vs. shear rate data was collected in standard equilibrium flow mode. The oscillatory shear thixotropy characterization was performed by exposing the sample to a steady shear for 60 seconds at a shear rate of 100 sec$^{-1}$, and then upon cessation of steady shear, immediately beginning an oscillatory shear experiment. The oscillatory shear segment of the thixotropy measurement was performed at 10 rads/sec using strains that were in the linear viscoelastic region for the particular sample under study. Oscillatory frequency sweep data was collected between 0.1 and 100 rads/sec using strains that were in the linear viscoelastic region for the particular sample under study.

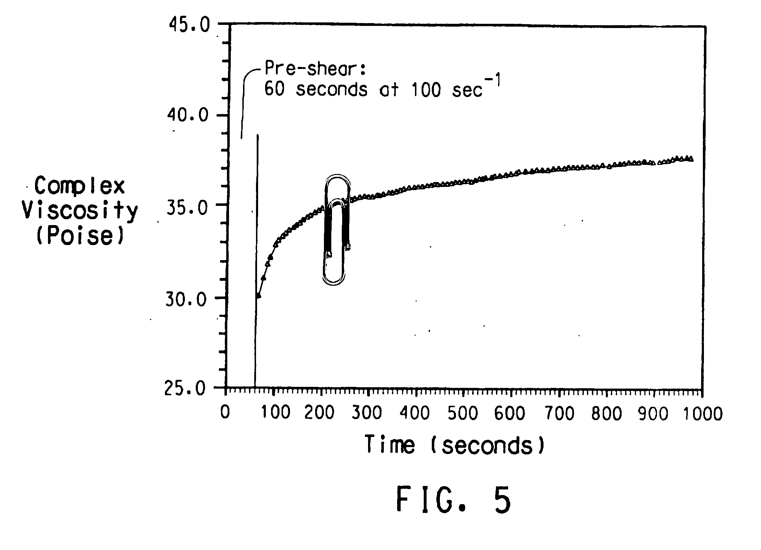

From Figure 5, it can be seen that Slurry 3 of the present invention has fairly high and steady viscosity.

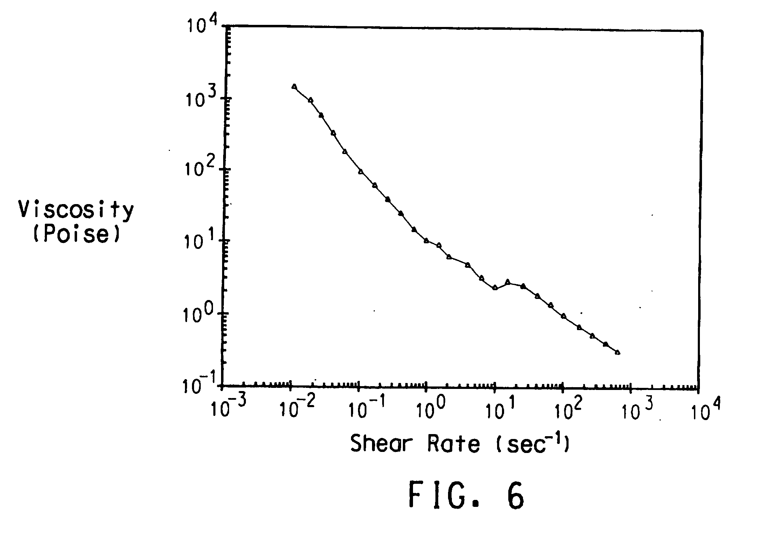

From Figure 6, it can be seen that the viscosity of Slurry 3 of the present invention when under shear drops rapidly. As a result, coating compositions containing the slurries of the present invention would be easily sprayable through conventional application techniques, such as spraying under pressure through a spray nozzle.

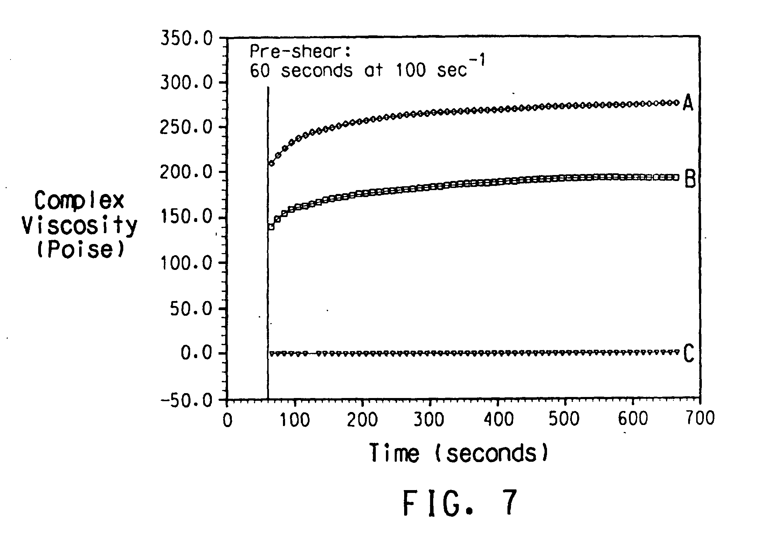

From Figure 7 is comparative graph of the time versus the complex viscosity C of the blend of Slurry 4 (before the reagitation of the blend), the complex viscosity of B of Slurry 4 (after the reagitation of the blend) and the complex viscosity of A of Slurry 1 (organic fibers agitated in a liquid component containing the polymer). From Figure 7, it can be seen that when the organic fibers are agitated in solvent alone and then mixed with a polymer to form a blend (Curve C) the complex viscosity of the blend is not as high as when the blend is reagitated (Curve B). Figure 7 also shows that Slurry 4 which was reagitated, Curve B, approximates the rheology of Slurry 1, Curve A, prepared from agitating the organic fibers in a liquid component containing polymer. Coating compositions containing properly prepared slurries of the present invention would help prevent settling of pigments due to high in-can viscosity and impart improved sag resistance, mottling resistance, and flake control after paint application.

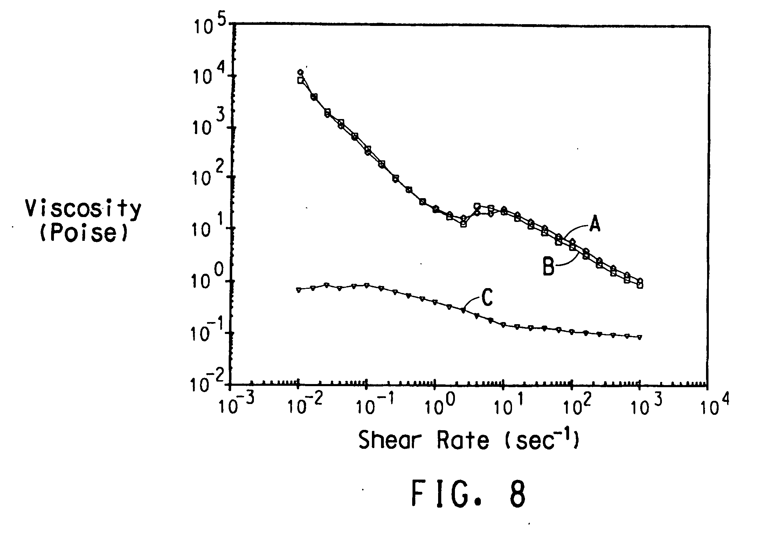

From Figure 8, it can be readily seen that the reagitation improves the viscosity under shear of Slurry 4 as compared to the blend of Slurry 4 before its reagitation (Curve C). Slurry 1, Curve A, is a slurry where the organic fibers were agitated in a liquid component containing polymer.

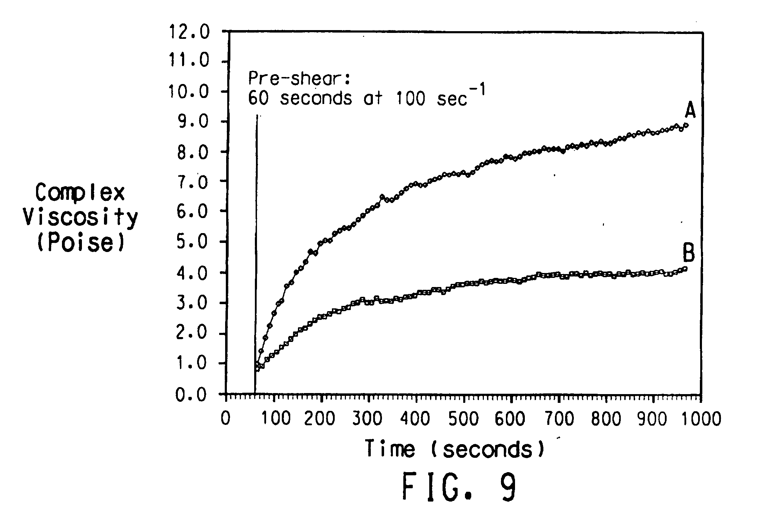

From Figure 9, it can be readily seen that the presence of the micropulp of the present invention in a paint of Example 8 (Curve A) shows as significant increase in complex viscosity when compared to the same paint Example 7 (Control) that does not contain the micropulp. Improvement in the viscosity under shear was also observed for Example 8 over Example 7 (Control).

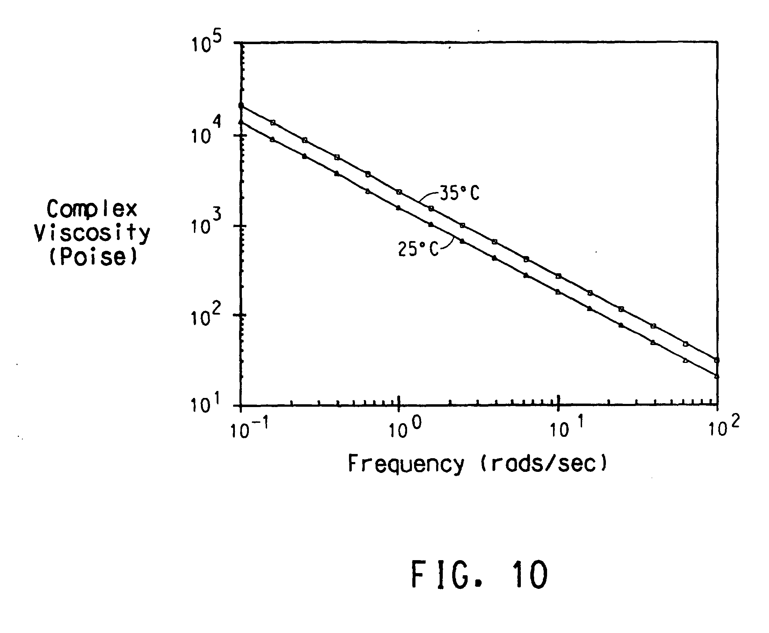

From Figure 10, it can be seen that increasing the slurry temperature of Slurry 15 also increases its viscosity, which is very advantageous when a layer of the slurry containing coating composition is cured at elevated temperatures, such as baking temperatures. Typically, elevated temperatures tend to lower viscosities of coating compositions. As a result, such compositions tend to have lower sag resistance and metallic flake control. By contrast, the unexpected increase in the paint viscosity at elevated temperatures observed in the composition of the present invention would have improved sag resistance and metallic flake control over conventional coating compositions.

**Example 12**

Organic fibers (Kevlar® pulp supplied by DuPont Company, Wilmington, Delaware) were added to a liquid component (Aropol® 559999 unsaturated polyester polymer supplied by Ashland Chemical) at a solids level of 1 % by weight of the organic fibers to form 9.092 liter (two gallon) premix, which was then agitated in SM 1.5 Super mill with A4P disc configuration supplied by Premier Mill Corp. The solid component used was cerium stabilized zirconium oxide, 1.0 mm media with 80% by volume loading. The mill was run with a disc speed of 701-731.5 meters per minute (2300-2400 feet per minute). The mixture was milled at a throughput of 20.82-21.95 liters per hour (5.5-5.8 gallons per hour). Samples were collected after first, second, third and fifth passes of the mixture through the mill and then continued in the recirculation mode with about 2.273 liter (half a gallon) of the mixture still remaining in the mill. The samples were collected after 10 minute, 20 minute and 60 minute of recirculation. The analysis of the collected samples indicated that after each pass, the texture and appearance of the slurry improved. At some point, well before milling process was stopped, there no longer was any texture nor the appearance of fiber, yet the rheology was vastly improved. The following Table 13 provides the data:

**Table 13**

|  | Viscosity (cp @ 0.1 sec-1) | Viscosity (cp @ 100 sec-1) |
|---|---|---|
| polyester polymer | 370* | 390 |
| Premix | 1.7E6 | 6.4E3 |
| Slurry after 3 passes | 1.1E6 | 5.2E3 |
| Slurry after 5 passes plus 1 hour recirculation | 2.2E6 | 9.8E3 |
| * The value was extrapolated from graph since we could only measure down to a shear rate of 0.27 sec-1 for the polymer. | | |

As shown in Table 13, the polymer was Newtonian with a viscosity of about 380 cp. The premix of 1% Kevlar® pulp with the polymer became pseudoplastic with a viscosity of 1,700,000 cp at a low shear rate and 6,400 cp at a higher shear rate. As the micropulp was formed (3 passes), the viscosity dropped by 35%. But, as the micropulp was shortened, the viscosity started increasing again by the 5th pass with 10 min recirculation. When the agitation process was terminated, the viscosity of the resulting slurry was about 30% higher with the micropulp than with an equal amount of starting pulp.

**Example 13**

Organic fibers (Kevlar® pulp, Merge 1 F543; 1.5 mm Kevlar® floc Merge 6F561; and Nomex® fibrids Merge F25W supplied by DuPont Company, Wilmington, Delaware) were added separately to water at a solids level of 1.3% for all the items. These premixes were then agitated in a 1.5 liter Premier media mill supplied by Premier Mill, Inc. The solid component used was 0.7-1.2 mm Ce-stabilized zirconia with 80% volume loading. The mill was run with a stirrer tip speed of 914.4 meters per minute (3000 fpm). The mixtures were milled at a throughput of 2.5 l/min. The samples were run in recirculation for about 500 minutes, with samples taken periodically throughout the run. Fiber length measurements were made using a Malvern Mastersizer 2000 laser diffraction, supplied by Malvern Instruments, Ltd. of United Kingdom and single point nitrogen BET surface area measurements were made using a Strohlein Area Meter (supplied by Strohlein of Switzerland). Table 14 lists the results:

**Table 14**

| Fiber | Mill Time in minutes | Length* in micrometers | Surface Area in m²/g |
|---|---|---|---|
| Kevlar Pulp (1.3%) Merge 1 F543 | Start | 612 | 9.0 |
|  | 15 | 81 | 23.3 |
|  | 115 | 81 | 26.8 |
|  | 497 | 8.5 | 37.6 |
| Nomex Fibrids (1.3%) (refined**, Merge F25W) | Start | 319 | - |
|  | 25 | 94 | - |
|  | 100 | 28 | - |
|  | 490 | 8.3 | - |
| Kevlar Floc (1.3%) (1.5 mm Merge 6F561) | 15 | 71 | - |
|  | 90 | 23 | - |
|  | 330 | 10 | 80.0 |

*Volume average mean length **Fibrids used in this trial were already size reduced via refining

**Claims**

1. A process for producing micropulp comprising the steps of:

   contacting organic fibers with a medium comprising a liquid component and a solid component; and
   agitating said medium and said organic fibers for sufficient duration to transform said organic fibers into said micropulp dispersed in said medium wherein said micropulp

   - is a fibrous organic material that includes an intermeshed combination of two or more of webbed, dendritic, branched, mushroomed or fibril structures, and
   - has a volume average length ranging from 0.01 micrometers to 50 micrometers.

2. The process of claim 1 wherein said micropulp comprises fibrous organic material having an average surface area ranging from 25 to 500 square meters per gram.

3. The process of any one of the preceding claims wherein said organic fibers are incrementally transformed into said micropulp during said agitating step.

4. The process of any one of the preceding claims wherein said agitating step takes place in an attritor or in a mill.

5. The process of any one of the preceding claims wherein said solid component comprises spheroids, diagonals, irregularly shaped particles or a combination thereof, which are made from plastic resin, glass, alumina, zirconium oxide, zirconium silicate, cerium-stabilized zirconium oxide, fused zirconia silica, steel, stainless steel, sand, tungsten carbide, silicon nitride, silicon carbide, agate, mullite, flint, vitrified silica, boran nitrate, ceramics, chrome steel, carbon steel, cast stainless steel, or a combination thereof.

6. The process of any one of the preceding claims wherein said liquid component comprises an aqueous liquid, one or more liquid polymers, one or more solvents, or a combination thereof.

7. The process of any one of the preceding claims wherein said contacting step comprises:

   mixing said fibers with said liquid component of said medium to form a premix;
   adding said premix to said solid component.

8. The process of any one of the preceding claims wherein said organic fibers comprise continuous fiber, non-continuous fiber, pulp or fibrids.

9. The process of any one of the preceding claims wherein said organic fibers are made from aliphatic polyamides, polyesters, polyacrylonitriles, polyvinyl alcohols, polyolefins, polyvinyl chlorides, polyvinylidene chlorides, polyurethanes, polyfluorocarbons, phenolics, polybenzimidazoles, polyphenylenetriazoles, polyphenylene sulfides, polyoxadiazoles, polyimides, aromatic polyamides, or a mixture thereof.

10. The process of claim 9 wherein said aromatic polyamide is (p-phenylene terephthalamide), poly(m-phenylene isophthalamide), or a mixture thereof.

11. The process of any one of the preceding claims further comprising separating said solid component from said liquid component containing said micropulp to form a slurry.

12. The process of any one of the preceding claims further comprising separating and drying said micropulp from said liquid component.

13. A process for producing micropulp comprising the steps of:

contacting organic fibers with a first medium comprising a first liquid component comprising a solvent and a solid component;
agitating said first medium and said organic fibers for sufficient duration to transform first organic fibers into a first micropulp dispersed in said first medium, wherein said first micropulp is a fibrous organic material that includes an intermeshed combination of two or more of webbed, dendritic, branched, mushroomed or fibril structures;
contacting said first medium with a second liquid component comprising a polymer, said solvent, and said solid component to form a blend; and
agitating said blend to transform said first micropulp into a second micropulp dispersed in said second medium, wherein said second micropulp is

- a fibrous organic material that includes an intermeshed combination of two or more of webbed, dendritic, branched, mushroomed or fibril structures, and
- has a volume average length ranging from 0.01 micrometers to 50 micrometers.

14. The process of claim 13 further comprising removing said solid component from said second medium.

15. Micropulp, being a fibrous organic material that includes an intermeshed combination of two or more of webbed, dendritic, branched, mushroomed or fibril structures, and having a volume average length ranging from 0.01 micrometers to 50 micrometers.

16. Micropulp according to claim 15 having an average surface area ranging from 25 to 500 square meters per gram.

17. The micropulp of claim 15 or 16 wherein said fibrous organic material is an aliphatic polyamide, polyester, polyacrylonitrile, polyvinyl alcohol, polyolefin, polyvinyl chloride, polyvinylidene chloride, polyurethane, polyfluorocarbon, phenolic, polybenzimidazole, polyphenylenetriazole, polyphenylene sulfide, polyoxadiazole, polyimide, aromatic polyamide, or a mixture thereof.

18. The micropulp of claim 17 wherein the aromatic polyamide is poly(para-phenylene terephthalamide).

19. A slurry comprising a liquid component and the micropulp of any one of claims 15 to 18.

20. The slurry of claim 19 wherein said liquid component comprises an aqueous liquid, one or more liquid polymers, one or more solvents, or a combination thereof.

21. A process for producing a slurry comprising the steps of:

contacting first organic fibers with a first medium comprising a first liquid component and a first solid component, wherein the first liquid component comprises a first aqueous liquid, one or more first liquid polymers, first organic solvent or a mixture thereof;

agitating the first medium and the first organic fibers for sufficient duration to transform the first organic fibers into a first micropulp dispersed in the first medium;

contacting the first medium with second organic fibers and a second medium to form a blend, the second medium comprising a second liquid component and a second solid component, wherein the second liquid component comprises one or more second liquid polymers and a second aqueous liquid, second organic solvent or a mixture thereof;

agitating the blend to transform the second organic fibers into second micropulp dispersed in the blend; and separating the first and the second solid components from the blend to form a slurry, wherein said first and second micropulps

- are fibrous organic materials that include an intermeshed combination of two or more of webbed, dendritic, branched, mushroomed or fibril structures, and
- have a volume average length ranging from 0.01 micrometers to 50 micrometers.

22. The process of claim 1 wherein said first organic fibers, said first solid component, said first organic solvent and said first polymer are the same as said second organic fibers, said second solid component, said second organic solvent and said second polymer.

23. Coating composition including a binder component in which the micropulp of any one of claims 15 to 18 is dispersed.

24. Coating composition according to claim 23, **characterized in that** it comprises a crosslinkable binder component and a crosslinking component stored in separate containers and mixed Prior to use to form a pot mix.

25. Coating composition according to claims 23 or 24, **characterized in that** it further comprises in the range of from 0.1 percent to 50 percent, based on the total weight of composition solids, of a modifying resin.

26. Use of a micropulp of any one of claims 15 to 18 to improve chip resistance of coatings, preferably in OEM automotive or automotive refinish applications, to improve the pseudoplastic behaviour of coating compositions, to improve sanding properties in automotive refinish applications, or as a reinforcement and thixotrope in polymers.

**Patentansprüche**

1. Verfahren zur Herstellung von Mikropulpe, das die folgenden Schritte aufweist:

Inkontaktbringen von organischen Fasern mit einem Medium, das eine flüssige Komponente und eine feste Komponente aufweist; und
ausreichend langdauerndes Rühren des Mediums und der organischen Fasern, um die organischen Fasern in die Mikropulpe umzuwandeln, die in dem Medium dispergiert ist, wobei die Mikropulpe

- ein faserförmiges organisches Material ist, das eine vernetzte Kombination von zwei oder mehreren verrippten, verästelten, verzweigten, pilzförmigen oder faserartigen Strukturen enthält, und
- eine volumengemittelte Länge im Bereich von 0,01 $\mu$m bis 50 $\mu$m aufweist.

2. Verfahren nach Anspruch 1, wobei die Mikropulpe faserförmiges organisches Material mit einem mittleren Oberflächeninhalt im Bereich von 25 bis 500 Quadratmeter pro Gramm aufweist.

3. Verfahren nach einem der vorstehenden Ansprüche, wobei die organischen Fasern während des Rührschritts stufenweise in die Mikropulpe umgewandelt werden.

4. Verfahren nach einem der vorstehenden Ansprüche, wobei der Rührschritt in einem Attritor oder in einer Mühle stattfindet.

5. Verfahren nach einem der vorstehenden Ansprüche, wobei die feste Komponente Sphäroide, Diagonalen, unregelmäßig geformte Teilchen oder eine Kombination daraus aufweist, die aus Kunstharz, Glas, Aluminiumoxid, Zirconiumdioxid, Zirconiumsilicat, cerium-stabilisiertem Zirconiumdioxid, geschmolzenem Zirconiumdioxid-Siliciumdioxid, Stahl, Edelstahl, Sand, Wolframcarbid, Siliciumnitrid, Siliciumcarbid, Achat, Mullit, Feuerstein, glasartigem Siliciumdioxid, Bornitrat, Keramik, Chromstahl, Kohlenstoffstahl, nichtrostendem Stahlguß oder einer Kombination davon hergestellt werden.

**6.** Verfahren nach einem der vorstehenden Ansprüche, wobei die flüssige Komponente eine wäßrige Flüssigkeit, ein oder mehrere flüssige Polymere, ein oder mehrere Lösungsmittel oder eine Kombination davon aufweist.

**7.** Verfahren nach einem der vorstehenden Ansprüche, wobei der Kontaktierungsschritt aufweist:

Vermischen der Fasern mit der flüssigen Komponente des Mediums zu einem Vorgemisch;
Zugabe des Vorgemischs zu der festen Komponente.

**8.** Verfahren nach einem der vorstehenden Ansprüche, wobei die organischen Fasern kontinuierliche Fasern, nichtkontinuierliche Fasern, Pulpe oder Fibride aufweisen.

**9.** Verfahren nach einem der vorstehenden Ansprüche, wobei die organischen Fasern aus aliphatischen Polyamiden, Polyestern, Polyacrylnitrilen, Polyvinylalkoholen, Polyolefinen, Polyvinylchloriden, Polyvinylidenchloriden, Polyurethanen, Polyfluorkohlenstoffen, Phenolharzen, Polybenzimidazolen, Polyphenylentriazolen, Polyphenylensulfiden, Polyoxadiazolen, Polyimiden, aromatischen Polyamiden oder einem Gemisch davon hergestellt werden.

**10.** Verfahren nach Anspruch 9, wobei das aromatische Polyamid (p-Phenylenterephthalamid), Poly(m-phenylenisophthalamid) oder ein Gemisch davon ist.

**11.** Verfahren nach einem der vorstehenden Ansprüche, das ferner das Abtrennen der festen Komponente von der die Mikropulpe enthaltenden flüssigen Komponente aufweist, um eine Aufschlämmung zu bilden.

**12.** Verfahren nach einem der vorstehenden Ansprüche, das ferner das Abtrennen und Trocknen der Mikropulpe von der flüssigen Komponente aufweist.

**13.** Verfahren zur Herstellung von Mikropulpe, das die folgenden Schritte aufweist:

Inkontaktbringen von organischen Fasern mit einem ersten Medium, das eine erste flüssige Komponente mit einem Lösungsmittel und einer festen Komponente aufweist;
ausreichend langdauerndes Rühren des ersten Mediums und der organischen Fasern, um erste organische Fasern in eine erste Mikropulpe umzuwandeln, die in dem ersten Medium dispergiert ist, wobei die erste Mikropulpe ein faserförmiges organisches Material ist, das eine vernetzte Kombination von zwei oder mehr verrippten, verästelten, verzweigten, pilzförmigen oder faserartigen Strukturen enthält;
Inkontaktbringen des ersten Mediums mit einer zweiten flüssigen Komponente, die ein Polymer, das Lösungsmittel und die feste Komponente aufweist, um ein Gemisch zu bilden; und
Rühren des Gemischs, um die erste Mikropulpe in eine zweite Mikropulpe umzuwandeln, die in dem zweiten Medium dispergiert ist, wobei die zweite Mikropulpe

- ein faserförmiges organisches Material ist, das eine vernetzte Kombination von zwei oder mehreren verrippten, verästelten, verzweigten, pilzförmigen oder faserartigen Strukturen enthält, und
- eine volumengemittelte Länge im Bereich von 0,01 $\mu$m bis 50 $\mu$m aufweist.

**14.** Verfahren nach Anspruch 13, das ferner das Entfernen der festen Komponente aus dem zweiten Medium aufweist.

**15.** Mikropulpe, die ein faserförmiges organisches Material ist, das eine vernetzte Kombination von zwei oder mehreren verrippten, verästelten, verzweigten, pilzförmigen oder faserartigen Strukturen enthält und eine volumengemittelte Länge im Bereich von 0,01 $\mu$m bis 50 $\mu$m aufweist.

**16.** Mikropulpe nach Anspruch 15 mit einem mittleren Oberflächeninhalt im Bereich von 25 bis 500 Quadratmeter pro Gramm.

**17.** Mikropulpe nach Anspruch 15 oder 16, wobei das faserförmige organische Material ein aliphatisches Polyamid, Polyester, Polyacrylnitril, Polyvinylalkohol, Polyolefin, Polyvinylchlorid, Polyvinylidenchlorid, Polyurethan, Polyfluorkohlenstoff, Phenolharz, Polybenzimidazol, Polyphenylentriazol, Polyphenylensulfid, Polyoxadiazol, Polyimid, aromatisches Polyamid oder ein Gemisch davon ist.

**18.** Mikropulpe nach Anspruch 17, wobei das aromatische Polyamid Poly(paraphenylenterephthalamid) ist.

**19.** Aufschlämmung, die eine flüssige Komponente und die Mikropulpe nach einem der Ansprüche 15 bis 18 aufweist.

**20.** Aufschlämmung nach Anspruch 19, wobei die flüssige Komponente eine wäßrige Flüssigkeit, ein oder mehrere flüssige Polymere, ein oder mehrere Lösungsmittel oder eine Kombination davon aufweist.

**21.** Verfahren zur Herstellung einer Aufschlämmung, das die folgenden Schritte aufweist:

Inkontaktbringen von ersten organischen Fasern mit einem ersten Medium, das eine erste flüssige Komponente und eine erste feste Komponente aufweist, wobei die erste flüssige Komponente eine erste wäßrige Flüssigkeit, ein oder mehrere erste flüssige Polymere, ein erstes organisches Lösungsmittel oder ein Gemisch davon aufweist;
ausreichend langdauerndes Rühren des ersten Mediums und der ersten organischen Fasern, um die ersten organische Fasern in eine erste Mikropulpe umzuwandeln, die in dem ersten Medium dispergiert ist;
Inkontaktbringen des ersten Mediums mit zweiten organischen Fasern und einem zweiten Medium, um ein Gemisch zu bilden, wobei das zweite Medium eine zweite flüssige Komponente und eine zweite feste Komponente aufweist, wobei die zweite flüssige Komponente ein oder mehrere flüssige Polymere und eine zweite wäßrige Flüssigkeit, ein zweites organisches Lösungsmittel oder ein Gemisch davon aufweist; und
Rühren des Gemischs, um die zweiten organischen Fasern in eine zweite Mikropulpe umzuwandeln, die in dem Gemisch dispergiert ist,
Trennen der ersten und zweiten festen Komponenten von dem Gemisch, um eine Aufschlämmung zu bilden;
wobei die ersten und zweiten Mikropulpen

- faserförmige organische Materialien sind, die eine vernetzte Kombination von zwei oder mehreren verrippten, verästelten, verzweigten, pilzförmigen oder faserartigen Strukturen enthalten, und
- eine volumengemittelte Länge im Bereich von 0,01 $\mu$m bis 50 $\mu$m aufweisen.

**22.** Verfahren nach Anspruch 21, wobei die ersten organischen Fasern, die erste feste Komponente, das erste organische Lösungsmittel und das erste Polymer die gleichen sind wie die zweiten organischen Fasern, die zweite feste Komponente, das zweite organische Lösungsmittel und das zweite Polymer.

**23.** Beschichtungszusammensetzung, die eine Bindemittelkomponente enthält, in der die Mikropulpe nach einem der Ansprüche 15 bis 18 dispergiert ist.

**24.** Beschichtungszusammensetzung nach Anspruch 23, **dadurch gekennzeichnet, daß** sie eine vernetzbare Bindemittelkomponente und eine Vernetzungskomponente aufweist, die in getrennten Behältern gelagert und vor Gebrauch zu einem Verarbeitungsgemisch vermischt werden.

**25.** Beschichtungszusammensetzung nach Anspruch 23 oder 24, **dadurch gekennzeichnet, daß** sie ferner 0,1 bis 50 Gew.-%, bezogen auf das Gesamt-Feststoffgewicht der Zusammensetzung, eines modifizierenden Harzes aufweist.

**26.** Verwendung einer Mikropulpe nach einem der Ansprüche 15 bis 18 zur Verbesserung der Kantenfestigkeit von Beschichtungen, vorzugsweise in Anwendungen bei der Erstlackierung oder Reparaturlackierung von Kraftfahrzeugen, zur Verbesserung des pseudoplastischen Verhaltens von Beschichtungszusammensetzungen, zur Verbesserung der Schleifeigenschaften in Anwendungen bei der Reparaturlackierung von Kraftfahrzeugen oder als Verstärkung und Thixotrop in Polymeren.

**Revendications**

**1.** Procédé pour la production d'une micropulpe comprenant les étapes:

de mise en contact de fibres organiques avec un milieu comprenant un composant liquide et un composant solide; et
d'agitation dudit milieu et desdites fibres organiques pendant une durée suffisante pour transformer lesdites fibres organiques en ladite micropulpe dispersée dans ledit milieu, où ladite micropulpe:

- est un matériau organique fibreux qui inclut une combinaison entremêlée de deux ou plus de structures en bande, dendritique, ramifiée, en champignon ou en fibrille, et
- possède une longueur moyenne en volume variant de 0,01 micromètre à 50 micromètres.

**2.** Procédé selon la revendication 1, dans lequel ladite micropulpe comprend un matériau organique fibreux présentant une surface spécifique moyenne variant de 25 à 500 mètres carrés par gramme.

**3.** Procédé selon l'une quelconque des revendications précédentes, dans lequel lesdites fibres organiques sont transformées par incréments en ladite micropulpe durant ladite étape d'agitation.

**4.** Procédé selon l'une quelconque des revendications précédentes, dans lequel ladite étape d'agitation a lieu dans un appareil opérant par frottement ou dans un broyeur.

**5.** Procédé selon l'une quelconque des revendications précédentes, dans lequel ledit composant solide comprend des sphéroïdes, des diagonales, des particules à forme irrégulière ou une combinaison de celles-ci, qui sont composées de résine plastique, de verre, d'alumine, d'oxyde de zirconium, de silicate de zirconium, d'oxyde de zirconium stabilisé par du cérium, de zircone-silice fusionnées, d'acier, d'acier inoxydable, de sable, de carbure de tungstène, de nitrure de silicium, de carbure de silicium, d'agate, de mullite, de silex, de silice vitrifiée, de nitrate de borane, de céramiques, d'acier au chrome, d'acier au carbone, d'acier inoxydable moulé ou d'une combinaison de ceux-ci.

**6.** Procédé selon l'une quelconque des revendications précédentes, dans lequel ledit composant liquide comprend un liquide aqueux, un ou plusieurs polymères liquides, un ou plusieurs solvants ou une combinaison de ceux-ci.

**7.** Procédé selon l'une quelconque des revendications précédentes, dans lequel ladite étape de mise en contact comprend:

le mélange desdites fibres avec ledit composant liquide dudit milieu pour former un pré-mélange;
l'ajout dudit pré-mélange audit composant solide.

**8.** Procédé selon l'une quelconque des revendications précédentes, dans lequel lesdites fibres organiques comprennent une fibre continue, une fibre non continue, une pulpe ou des fibrides.

**9.** Procédé selon l'une quelconque des revendications précédentes, dans lequel lesdites fibres organiques sont composées de polyamides aliphatiques, de polyesters, de polyacrylonitriles, de polyvinylalcools, de polyoléfines, de polyvinylchlorures, de polyvinylidènechlorures, de polyuréthanes, de polyfluorocarbures, de composés phénoliques, de polybenzimidazoles, de polyphénylènetriazoles, de polyphénylènesulfures, de polyoxadiazoles, de polyimides, de polyamides aromatiques ou d'un mélange de ceux-ci.

**10.** Procédé selon la revendication 9, dans lequel ledit polyamide aromatique est un (p-phénylène téréphtalamide), un poly(m-phénylène isophtalamide) ou un mélange de ceux-ci.

**11.** Procédé selon l'une quelconque des revendications précédentes, comprenant en outre la séparation dudit composant solide à partir dudit composant liquide contenant ladite micropulpe pour former une suspension.

**12.** Procédé selon l'une quelconque des revendications précédentes, comprenant en outre la séparation et le séchage de ladite micropulpe à partir dudit composant liquide.

**13.** Procédé pour la production d'une micropulpe comprenant les étapes:

de mise en contact de fibres organiques avec un premier milieu comprenant un premier composant liquide comprenant un solvant et un composant solide;
d'agitation dudit premier milieu et desdites fibres organiques pendant une durée suffisante pour transformer les premières fibres organiques en une première micropulpe dispersée dans ledit premier milieu, où ladite première micropulpe est un matériau organique fibreux qui inclut une combinaison entremêlée de deux ou plus de structures en bande, dendritique, ramifiée, en champignon ou en fibrille;
de mise en contact dudit premier milieu avec un deuxième composant liquide comprenant un polymère, ledit solvant et ledit composant solide pour former un mélange; et
d'agitation dudit mélange pour transformer ladite première micropulpe en une deuxième micropulpe dispersée dans ledit deuxième milieu, où ladite deuxième micropulpe:

- est un matériau organique fibreux qui inclut une combinaison entremêlée de deux ou plus de structures en bande, dendritique, ramifiée, en champignon ou en fibrille, et
- possède une longueur moyenne en volume variant de 0,01 micromètre à 50 micromètres.

**14.** Procédé selon la revendication 13, comprenant en outre le retrait dudit composant solide à partir dudit deuxième milieu.

**15.** Micropulpe, qui est un matériau organique fibreux qui inclut une combinaison entremêlée de deux ou plus de structures en bande, dendritique, ramifiée, en champignon ou en fibrille et qui possède une longueur moyenne en volume variant de 0,01 micromètre à 50 micromètres.

**16.** Micropulpe selon la revendication 15, présentant une surface spécifique moyenne variant de 25 à 500 mètres carrés par gramme.

**17.** Micropulpe selon la revendication 15 ou 16, dans laquelle ledit matériau organique fibreux est un polyamide aliphatique, un polyester, un polyacrylonitrile, un polyvinylalcool, une polyoléfine, un polyvinylchlorure, un polyvinylidènechlorure, un polyuréthane, un polyfluorocarbure, un composé phénolique, un polybenzimidazole, un polyphénylènetriazole, un polyphénylènesulfure, un polyoxadiazole, un polyimide, un polyamide aromatique ou un mélange de ceux-ci.

**18.** Micropulpe selon la revendication 17, dans laquelle le polyamide aromatique est un poly(paraphénylène téréphtalamide).

**19.** Suspension comprenant un composant liquide et la micropulpe selon l'une quelconque des revendications 15 à 18.

**20.** Suspension selon la revendication 19, dans laquelle ledit composant liquide comprend un liquide aqueux, un ou plusieurs polymères liquides, un ou plusieurs solvants ou une combinaison de ceux-ci.

**21.** Procédé pour la production d'une suspension comprenant les étapes:

de mise en contact de premières fibres organiques avec un premier milieu comprenant un premier composant liquide et un premier composant solide, où le premier composant liquide comprend un premier liquide aqueux, un ou plusieurs premiers polymères liquides, un premier solvant organique ou un mélange de ceux-ci;
d'agitation dudit premier milieu et desdites premières fibres organiques pendant une durée suffisante pour transformer les premières fibres organiques en une première micropulpe dispersée dans le premier milieu;
de mise en contact dudit premier milieu avec des deuxièmes fibres organiques et un deuxième milieu pour former un mélange, le deuxième milieu comprenant un deuxième composant liquide et un deuxième composant solide, où le deuxième composant liquide comprend un ou plusieurs deuxièmes polymères liquides et un deuxième liquide aqueux, un deuxième solvant organique ou un mélange de ceux-ci;
d'agitation du mélange pour transformer les deuxièmes fibres organiques en une deuxième micropulpe dispersée dans le mélange; et
de séparation des premiers et deuxièmes composants solides à partir du mélange pour former une suspension;
dans lequel lesdites première et deuxième micropulpes:

- sont des matériaux organiques fibreux qui incluent une combinaison entremêlée de deux ou plus de structures en bande, dendritique, ramifiée, en champignon ou en fibrille, et
- possèdent une longueur moyenne en volume variant de 0,01 micromètre à 50 micromètres.

**22.** Procédé selon la revendication 21, dans lequel lesdites premières fibres organiques, ledit premier composant solide, ledit premier solvant organique et ledit premier polymère sont les mêmes que lesdites deuxièmes fibres organiques, ledit deuxième composant solide, ledit deuxième solvant organique et ledit deuxième polymère.

**23.** Composition de revêtement, incluant un composant de liant dans lequel la micropulpe selon l'une quelconque des revendications 15 à 18 est dispersée.

**24.** Composition de revêtement selon la revendication 23, **caractérisée en ce qu'**elle comprend un composant de liant réticulable et un composant de réticulation stockés dans des récipients séparés et mélangés avant usage pour former un mélange de pot.

25. Composition de revêtement selon la revendication 23 ou 24, **caractérisée en ce qu'**elle comprend en outre dans l'intervalle de 0,1 pour-cent à 50 pour-cent, sur la base du poids total de solides de la composition, d'une résine de modification.

26. Utilisation d'une micropulpe selon l'une quelconque des revendications 15 à 18, pour améliorer la résistance à l'écaillage de revêtements, de préférence dans des applications de OEM automobile ou de retouche automobile, pour améliorer le comportement pseudo-plastique de compositions de revêtements, pour améliorer les propriétés de sablage dans des applications de retouche automobile, ou comme un renforcement et un thixotrope dans des polymères.

FIG. 1

FIG. 2

FIG. 3

1 μm

FIG. 4

FIG. 5

FIG. 6

FIG. 7

EP 1 448 817 B1

FIG. 8

EP 1 448 817 B1

FIG. 9

EP 1 448 817 B1

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4053878 B
- JP 9119018 A
- US 5474842 A
- US 5028372 A
- US 5209877 A
- US 5026456 A
- US 3018091 A
- US 2999788 A
- US 3869430 A
- US 3869429 A
- US 3767756 A
- US 5527936 A
- US 5928577 A
- US 5472649 A
- US 3933954 A
- US 9827141 B
- US 5244959 A
- US 4442269 A